(19) Europäisches Patentamt
European Patent Office
Office européen des brevets

(11) **EP 3 432 035 B1**

(12) **FASCICULE DE BREVET EUROPEEN**

(45) Date de publication et mention
de la délivrance du brevet:
**25.08.2021 Bulletin 2021/34**

(51) Int Cl.:
***G01T 1/24*** *(2006.01)*

(21) Numéro de dépôt: **18183519.0**

(22) Date de dépôt: **13.07.2018**

(54) **PROCÉDÉ ET CIRCUIT ELECTRONIQUE DE TRAITEMENT D'UNE IMPULSION GÉNÉRÉE PAR UN DÉTECTEUR DE RAYONNEMENT IONISANT**

VERFAHREN UND ELEKTRONISCHES ZIRKUIT ZUR VERARBEITUNG VON VON EINEM IONISIERENDEN STRAHLUNGSDETEKTOR GENERIERTEN PULS

PULSE PROCESSING METHOD AND ELECTRONIC CIRCUITRY FOR A PULSE GENERATED BY AN IONIZING RADIATION DETECTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2017 FR 1756775**

(43) Date de publication de la demande:
**23.01.2019 Bulletin 2019/04**

(73) Titulaire: **Commissariat à l'Énergie Atomique et aux Énergies Alternatives
75015 Paris (FR)**

(72) Inventeurs:
• **BRAMBILLA, Andréa
38113 VEUREY-VOROIZE (FR)**
• **DE CESARE, Cinzia
38000 GRENOBLE (FR)**

(74) Mandataire: **INNOV-GROUP
310, avenue Berthelot
69372 Lyon Cedex 08 (FR)**

(56) Documents cités:
**CA-A1- 2 732 522      US-A1- 2017 086 761**

• **ABBENE L ET AL: "High-rate x-ray spectroscopy in mammography with a CdTe detector: A digital pulse processing approach", MEDICAL PHYSICS, AIP, MELVILLE, NY, US, vol. 37, no. 12, 8 novembre 2010 (2010-11-08), pages 6147-6156, XP012144784, ISSN: 0094-2405, DOI: 10.1118/1.3512804**

## Description

## DOMAINE TECHNIQUE

L'invention concerne les détecteurs de rayonnement ionisants, en particulier les rayonnements photoniques X ou gamma.

## ART ANTERIEUR

Les dispositifs de détection de rayonnement ionisants, basés sur des matériaux détecteurs gazeux, semi-conducteurs ou scintillateurs, permettent d'obtenir des impulsions électriques formées par des interactions du rayonnement dans le matériau détecteur. L'amplitude de chaque impulsion dépend de l'énergie déposée par le rayonnement au cours de chaque interaction. Ces dispositifs dont fréquemment utilisés dans des applications nécessitant de connaître l'énergie du rayonnement ionisant incident au détecteur. Les domaines d'application sont larges, et comprennent notamment le contrôle non destructif, par exemple le contrôle de bagages, le diagnostic médical ou les mesures dans des installations nucléaires. Généralement, les dispositifs comportent un circuit électronique de traitement des impulsions permettant une estimation aussi précise que possible de leurs amplitudes. On utilise notamment un circuit de mise en forme des impulsions générées par le détecteur, de façon à pouvoir estimer l'amplitude de chaque impulsion avec précision. En effet, de cette précision dépend la précision avec laquelle l'énergie du rayonnement est estimée, ce qui conditionne la résolution en énergie du détecteur. Les circuits de mise en forme sont généralement paramétrés par une constante de temps, ou durée de mise en forme, selon laquelle chaque impulsion est analysée. Il est généralement convenu que la constante de temps optimale est supérieure ou égale au temps de montée des impulsions électriques formées par le détecteur.

Certaines applications nécessitent d'effectuer des mesures dites en fort taux de comptage, lorsque le détecteur est exposé à un rayonnement incident intense. Dans de telles configurations, deux interactions, issues de rayonnements différents, peuvent survenir au même instant, ou dans un intervalle de temps tellement court que l'impulsion électrique formée n'est plus représentative d'une interaction formée par un rayonnement, mais par une superposition des impulsions formées consécutivement par différents rayonnements. Cela correspond à un empilement. L'amplitude d'une impulsion résultant d'un empilement est élevée, car elle correspond à la somme de tout ou partie des énergies déposées dans le détecteur par plusieurs rayonnements. Ainsi, une impulsion résultant d'un empilement est inutile à la détermination de l'énergie du rayonnement incident.

Afin de limiter l'occurrence des empilements, il est admis qu'il faut réduire la durée de mise en forme selon laquelle le circuit de mise en forme traite chaque impulsion, au détriment de la résolution en énergie, comme mentionné dans la publication Goulding F.S. "Large coaxial germanium detectors - Correction for ballistic deficit and trapping losses", IEEE transactions on nuclear science, Vol.37, No2, April 1990. Dans la publication précitée, les auteurs utilisent deux circuits de mise en forme différents, traitant respectivement chaque impulsion selon une première durée de mise en forme et selon une deuxième durée de mise en forme, la deuxième durée de mise en forme étant plus longue que la première durée de mise en forme. Le détecteur utilisé est un détecteur coaxial de type Germanium de grand volume, ce type de détecteur étant particulièrement adapté à des mesures de haute résolution en énergie à faible flux. Cette méthode comporte une estimation du déficit balistique de chaque impulsion traitée par la deuxième durée de mise en forme, c'est-à-dire la durée de mise en forme la plus longue. L'estimation du déficit balistique est estimée en combinant une soustraction des amplitudes respectives des impulsions résultant des deux circuits de mise en forme, avec un ratio entre les deux durées de mise en forme. Le déficit balistique ainsi estimé est ajouté à l'impulsion traitée par le deuxième circuit de mise en forme, l'objectif principal étant d'optimiser la résolution en énergie.

Le document US2017086761 adresse le problème des mesures en fort taux de comptage. Dans ce document, chaque impulsion est traitée par un circuit présentant une durée de mise en forme longue et par un circuit présentant une durée de mise en forme courte. En cas de survenue d'un empilement de deux impulsions, on détermine une amplitude totale $E_{TOTAL}$ de l'empilement par le circuit à durée de mise enn forme longue. A l'aide du circuit à durée de mise en forme courte, on obtient des amplitudes $E_{C1}$ et $E_{C2}$ résultant respectivement de la mise en forme de chaque impulsion. Les amplitudes $E_1$ et $E_2$ de chaque impulsion sont ensuite estimées respectivement avec :

$$E_1 = E_{TOTAL} \frac{E_{C1}}{E_{C1} + E_{C2}} \text{ et}$$

$$E_2 = E_{TOTAL} \frac{E_{C2}}{E_{C1} + E_{C2}}.$$

Les inventeurs de la présente invention ont estimé que la méthode précédemment décrite est difficilement applicable à des situations dans lesquels on utilise un détecteur de faible volume exposé à des forts taux de comptage. Ils proposent un procédé de traitement d'une impulsion générée par un détecteur, compatible avec une utilisation en fort taux de comptage, et permettant de maintenir une estimation de l'énergie, correspondant à chaque interaction, fiable et robuste.

## EXPOSE DE L'INVENTION

Un premier objet de l'invention est un procédé de traitement d'une impulsion générée par un détecteur de rayonnement ionisant, selon la revendication 1.

On obtient ainsi une impulsion de mesure dont la première amplitude est corrigée.

La deuxième durée de mise en forme peut être supérieure ou inférieure à la première durée de mise en forme.

L'invention concerne également un circuit électronique de traitement selon la revendication 15.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

Les figures 1A et 1B représentent un exemple de dispositif de détection.

La figure 1C représente un modèle de préamplificateur.

La figure 1D montre un modèle de circuit de mise en forme à ligne à retard.

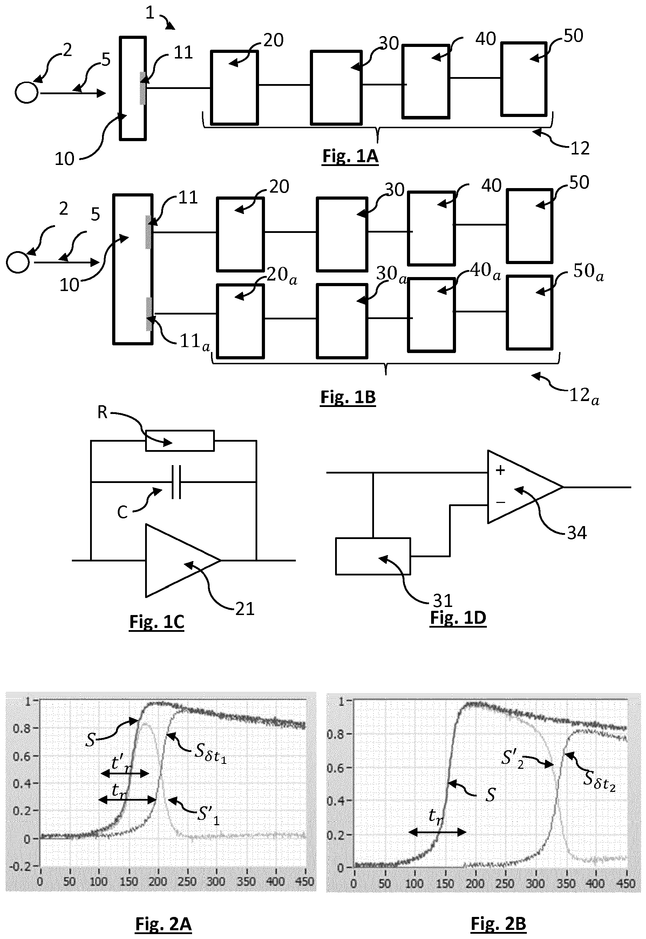

Les figures 2A et 2B illustrent le fonctionnement d'un circuit à ligne à retard. La figure 2A montre un exemple d'une impulsion de mesure, résultant d'un préamplificateur, de l'impulsion de mesure retardée d'un premier intervalle temporel ainsi que d'une impulsion, dite impulsion mise en forme, obtenue par soustraction de l'impulsion de mesure retardée à l'impulsion de mesure. La figure 2B montre un exemple d'une impulsion de mesure, résultant d'un préamplificateur, de l'impulsion de mesure retardée d'un deuxième intervalle temporel ainsi que d'une impulsion, dite impulsion mise en forme, obtenue par soustraction de l'impulsion de mesure retardée à l'impulsion de mesure.

La figure 2C illustre la mise en forme d'une impulsion de mesure par un filtre trapézoïdal. Elle représente une impulsion de mesure ainsi que deux impulsions mises en forme en considérant respectivement une première durée de mise en forme et une deuxième durée de mise en forme.

La figure 3A montre deux impulsions mises en forme en considérant une première durée de mise en forme, ces impulsions étant obtenues à un premier instant et à un deuxième instant, les premier et deuxième instants étant espacés de deux heures. La figure 3B est similaire à la figure 3A, les impulsions étant mises en forme en considérant une deuxième durée de mise en forme supérieure à la première durée de mise en forme.

La figure 3C montre l'évolution temporelle d'un spectre d'un rayonnement produit par une source isotopique de $^{57}$Co en mettant en oeuvre un circuit de mise en forme basé sur une première durée de mise en forme. La figure 3D montre l'évolution temporelle d'un spectre d'un rayonnement produit par une source isotopique de $^{57}$Co en mettant en œuvre un circuit de mise en forme basé sur une deuxième durée de mise en forme supérieure à la première durée de mise en forme.

La figure 4A représente les principales étapes d'un mode de réalisation de l'invention. La figure 4B montre un circuit comportant deux lignes à retard permettant deux mises en formes différentes d'une impulsion de mesure, respectivement en considérant une première durée de mise en forme et une deuxième durée de mise en forme.

La figure 4C représente un circuit de traitement permettant la mise en oeuvre du procédé illustré en lien avec la figure 4A.

Les figures 4D et 4E montrent respectivement l'application d'un critère de sélection d'une impulsion mise en forme respectivement selon une première durée de mise en forme et une deuxième durée de mise en forme.

La figure 5A montre une évolution temporelle d'un facteur de correction.

La figure 5B illustre deux spectres du rayonnement produit par une source de rayons X, sans mise en œuvre de l'invention, les acquisitions respectives des deux spectres étant décalées de 120 minutes.

La figure 5C illustre les spectres de rayonnement décrits en lien avec la figure 5B après mise en œuvre de l'invention.

La figure 6A représente les principales étapes d'un autre mode de réalisation de l'invention.

La figure 6B montre un circuit comportant trois lignes à retard permettant trois mises en formes différentes d'une impulsion de mesure, respectivement en considérant une première durée de mise en forme, une deuxième durée de mise en forme et une troisième durée de mise en forme.

La figure 6C représente l'évolution temporelle d'un premier facteur de comparaison et d'un deuxième facteur de comparaison.

La figure 6D montre une évolution d'un facteur de comparaison dit de calibration en fonction du premier facteur de comparaison représenté sur la figure 6C.

La figure 6E illustre une fonction de correction, permettant d'établir un facteur de correction en fonction d'un facteur de comparaison.

## EXPOSE DE MODES DE REALISATION PARTICULIERS

On a représenté, sur la figure 1A, un dispositif 1 permettant la mise en œuvre d'invention. Le dispositif comporte un détecteur 10, apte à interagir avec un rayonnement ionisant 5 émis par une source d'irradiation 2. Par rayonnement ionisant, on entend un rayonnement formé de particules aptes à ioniser la matière. Il peut s'agir d'un rayonnement alpha, d'un rayonnement beta, d'un rayonnement photonique de type X ou gamma, ou encore un rayonnement neutronique. Dans l'exemple représenté, le rayonnement est un rayonnement photonique de type X ou gamma, formé de photons dont l'énergie est par exemple comprise entre 1 keV et 2 MeV.

Dans l'exemple représenté, le détecteur comporte un matériau semi-conducteur, de type CdTe, mais il pourrait également s'agir d'un matériau semi-conducteur communément mis en œuvre pour la détection de rayonnements ionisants, par exemple de type Ge, Si, CdZnTe. Lorsqu'une particule, en l'occurrence un photon, du rayonnement ionisant 5 interagit dans le détecteur 10, des porteurs de charges se forment et migrent vers une électrode de collecte 11, par exemple une anode. La quantité de charges Q collectée par l'électrode 11 dépend, de préférence linéairement, de l'énergie E libérée par la particule sous l'effet de l'interaction.

D'autres types de détecteurs, par exemple des scintillateurs couplés à un convertisseur photons/porteurs de charge, ou un détecteur gazeux de type chambre d'ionisation, sont utilisables, dès lors qu'ils permettent la collecte d'une quantité de charges Q sous l'effet d'une énergie E libérée par le rayonnement ionisant au cours d'une interaction dans le détecteur 10. Dans cette description, le terme amplitude désigne la hauteur maximale d'une impulsion. Il peut également s'agir de l'intégrale d'une impulsion, ou toute autre fonction de la hauteur maximale ou de l'intégrale de l'impulsion.

L'électrode de collecte 11 est reliée à un circuit électronique de traitement 12, comportant :

- un circuit de préamplification 20, par exemple un préamplificateur de charge, apte à intégrer les charges collectées par l'électrode de collecte 11 et à former une impulsion S, dont l'amplitude A dépend de la quantité de charges Q collectés par l'électrode 11 suite à une interaction d'une particule dans le détecteur 10. Un tel préamplificateur est schématisé sur la figure 1C.
- un amplificateur 30, apte à amplifier et mettre en forme l'impulsion S et former une impulsion *S'* plus courte, de façon à ce qu'elle soit moins propice à la formation d'empilements. L'impulsion *S'* a une amplitude *A'*. Un exemple d'amplificateur est décrit ci-après, en lien avec la figure 1D.
- un circuit de correction 40, pour corriger l'impulsion mise en forme générée par le circuit de mise en forme 30 et former une impulsion corrigée $S_c$ dont l'amplitude $A'_c$, dite amplitude corrigée, est telle que

$$A'_c = \frac{1}{\eta} \times A',$$

où $\eta$ désigne un facteur de correction. Un aspect important de l'invention est la détermination du facteur de correction $\eta$, ce dernier étant variable dans le temps. Cette détermination est décrite par la suite.

- un analyseur 50 pour analyser l'amplitude corrigée $A'_c$, et plus précisément pour la classer en fonction de sa valeur. Il peut s'agir d'un analyseur monocanal ou multicanal, un analyseur multicanal permettant de former un spectre Sp suite à la détection d'une pluralité d'interactions. Par spectre en énergie, on entend la distribution en amplitude d'impulsions au cours de l'exposition du détecteur à une source de rayonnement. Un tel spectre se présente sous la forme d'un histogramme, dont chaque terme $Sp(i)$ représente le nombre d'impulsions détectées, dont l'amplitude est égale à $i$. Par amplitude égale à $i$ ; on entend une amplitude comprise dans une plage d'amplitude $\Delta i$ comprenant la valeur $i$, et par exemple centrée autour de la valeur $i$. La relation entre l'amplitude d'une impulsion et l'énergie déposée au cours de l'interaction à l'origine de l'impulsion, est généralement linéaire, et définie par un gain, dit gain de conversion. Un tel gain est défini lors d'un étalonnage en énergie, au cours duquel le détecteur est soumis à un rayonnement dont l'énergie est connue. De préférence, ce gain doit être aussi stable que possible dans le temps.

Le circuit électronique de traitement 12 peut comporter un convertisseur analogique numérique non représenté sur la figure 1A, ce dernier pouvant être disposé entre le préamplificateur 20 et le circuit de mise en forme 30, ou entre le circuit de mise en forme 30 et le circuit de correction 40, ou entre le circuit de correction 40 et l'analyseur 50, ou en aval de ce dernier. En fonction de la position du convertisseur analogique numérique, les circuits électroniques décrits ci-dessus sont soit analogiques, soit numériques.

La figure 1B montre un détecteur 10 pixelisé, comportant au moins deux électrodes de collecte 11 et $11_a$, chaque électrode de collecte étant respectivement reliée à un circuit de traitement 12, $12_a$. L'électrode de collecte $11_a$ est désignée par le terme électrode adjacente, car elle est disposée de façon adjacente de l'électrode de collecte 11. Le circuit de traitement 12 est tel que celui représenté en lien avec la figure 1A. Le circuit de traitement $12_a$ comprend un préamplificateur $20_a$, un amplificateur $30_a$, un circuit de correction $40_a$ et un analyseur $50_a$ tel que ceux décrits en lien avec le circuit de traitement 12. Usuellement, un détecteur pixelisé peut comporter plusieurs dizaines voire centaines d'électrodes de collecte. Ces électrodes peuvent être agencées selon une ligne ou une matrice bidimensionnelle.

La figure 1C schématise le circuit de préamplification 20 précédemment décrit. Il peut être schématisé par un amplificateur 21 relié à une boucle de contre-réaction RC, modélisée par une résistance R en parallèle avec un condensateur C. Les charges collectées par une électrode de collecte, au cours d'une interaction, forment une impulsion, dite impulsion de mesure, dont le temps de montée $t_r$ rapide et dont la descente est lente, la descente pouvant être modélisée selon une expression de type $e^{-\frac{t}{RC}}$, où $t$ désigne le temps. Le temps de montée $t_r$ correspond à l'intervalle temporel entre le début de l'impulsion de mesure S et son maximum. Une telle courbe est représentée sur les figures 2A et 2B. Le temps de montée $t_r$ est usuellement désigné par le terme anglosaxon rise time.

La figure 1D schématise l'amplificateur 30, ce dernier comportant une ligne à retard 31, appliquant un retard $\delta t$ à l'impulsion, de manière à former une impulsion retardée $S_{\delta t}$. Un soustracteur 32 permet de former une impulsion mise en forme $S'$, de telle sorte que $S' = S - S_{\delta t}$. Le principe d'une telle ligne à retard est connu, et est décrit plus précisément dans le brevet US7652242. L'impulsion mise en forme $S'$ est plus symétrique que l'impulsion $S$ issue du préamplificateur. Son amplitude $A'$ dépend, de préférence par une relation linéaire, de l'énergie cédée par le rayonnement ionisant durant son interaction dans le détecteur 10. Les figures 2A et 2B représentent deux situations, correspondant respectivement à une première ligne à retard appliquant un premier retard $\delta t_1$ et à une deuxième ligne à retard appliquant un deuxième retard $\delta t_2$ à l'impulsion de mesure S, avec $\delta t_2 > \delta t_1$. Dans cet exemple, $\delta t_2 > t_r > \delta t_1$. La première ligne à retard effectue une mise en forme dite courte, tandis que la deuxième ligne à retard effectue une mise en forme longue. Sur ces figures, on a représenté une impulsion $S$ issue d'un préamplificateur, les impulsions retardées $S_{\delta t_1}$ et $S_{\delta t_2}$ ainsi que les impulsions $S'_1$ et $S'_2$ issues du circuit de mise en forme respectivement selon le premier retard $\delta t_1$ et le deuxième retard $\delta t_2$, de telle sorte que :

$$S'_1 = S - S_{\delta t_1} \text{ et } S'_2 = S - S_{\delta t_2}$$

Le temps de montée $t'_r$ d'une impulsion mise en forme, correspondant au début de l'impulsion mise en forme et son maximum, usuellement désigné par le terme "peaking time", est fréquemment supérieur ou égal au temps de montée $t_r$ de l'impulsion de mesure $S$. Dans ce cas, l'amplitude de l'impulsion mise en forme prend en compte la totalité de la charge $Q$ collectée par l'électrode. Dans le cas contraire, comme on peut le voir sur la figure 2A, lorsque le temps de montée $t'_r$ de l'impulsion mise en forme $S'$ est inférieur au temps de montée $t_r$ de l'impulsion de mesure $S$, une fraction de la charge $Q$ n'est pas prise en compte dans l'amplitude de l'impulsion mise en forme, cette fraction non prise en compte étant désignée par le terme déficit balistique. Le peaking time $t'_r$ dépend de la durée de mise en forme $\delta t$ prise en compte par le circuit de mise en forme 30 de l'impulsion de mesure.

Comme évoqué en lien avec l'art antérieur, lorsque l'intensité du rayonnement ionisant incident 5 est importante, le flux de particules atteignant le détecteur est élevé et le nombre d'impulsions S formées par unité de temps, désigné par le terme taux de comptage, augmente. Cela se traduit par l'apparition d'empilements, un empilement correspondant à une configuration durant laquelle deux interactions, issues de deux particules différentes, sont suffisamment temporellement rapprochées pour être former une même impulsion, dont l'amplitude correspond au cumul de la charge collectée suite à chaque interaction. Ainsi, l'impulsion n'est pas porteuse d'une information pertinente quant à l'énergie du rayonnement incident. Un tel phénomène peut par exemple se produire dans des applications de type contrôle de bagages, dans lesquelles les bagages sont exposés à des faisceaux de rayonnement intenses, de façon à minimiser le temps de contrôle. Il peut également se produire lors de la réalisation de mesures nucléaires sous fort rayonnement, par exemple sur des composants nucléaires de forte activité.

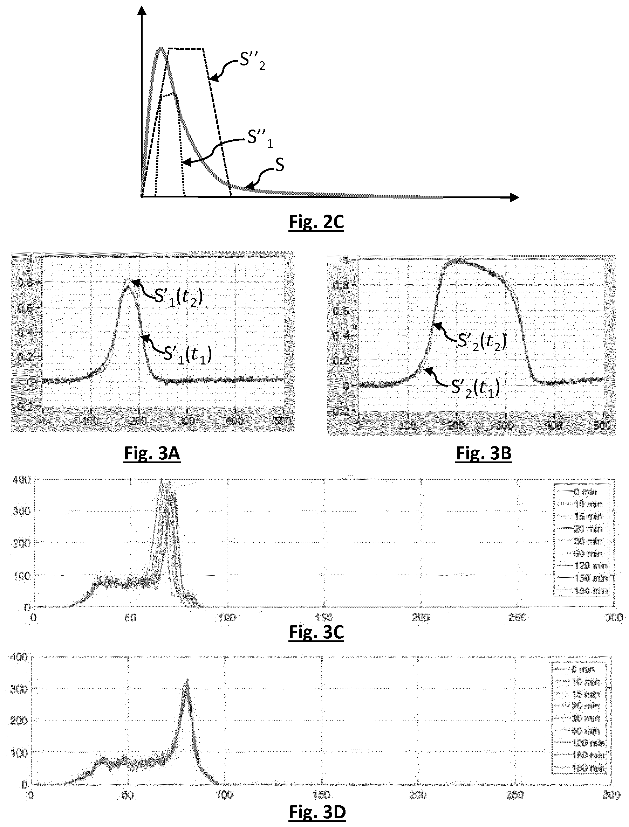

Lors des applications à fort taux de comptage, un peaking time $t'_r$ trop élevé augmente la probabilité de détection d'empilements. Il est nécessaire de le réduire, et d'accepter un certain déficit balistique. Or, il a été mis en évidence que du fait de fluctuations apparaissant dans la polarisation du matériau détecteur, lorsque le peaking time $t'_r$ est inférieur au temps de montée $t_r$ de l'impulsion de mesure fournie par le préamplificateur 20, l'amplitude de l'impulsion mise en forme $S'$ varie dans le temps. Cette variation est schématisée sur la figure 3A, représentant des impulsions $S'_1$ mises en forme selon un premier retard $\delta t_1$ inférieur au temps de montée de l'impulsion de mesure $S$, issue du préamplificateur.

La figure 3A montre une première impulsion $S'_1(t_1)$ et une deuxième impulsion $S'_1(t_2)$ formées respectivement à partir d'une impulsion de mesure $S(t_1)$ un premier instant $t_1$ et à partir d'une impulsion de mesure $S(t_2)$ à un deuxième instant $t_2$. Les deux impulsions $S'_1(t_1)$ et $S'_1(t_2)$ résultent d'un circuit de mise en forme à ligne à retard, prenant en compte un retard $\delta t_1$ de 50 ns. Les impulsions de mesure $S(t_1)$ et $S(t_2)$ traitées par le circuit de mise en forme ont un temps de montée $t_r$ de 100 ns. Elles résultent de l'exposition d'un détecteur de type Cd-Te d'épaisseur 3 mm exposé à une source isotopique de $^{57}$Co. La première impulsion mise en forme $S'_1(t_1)$ a été obtenue à un instant $t_1$ proche de la mise en service du détecteur. La deuxième impulsion a été obtenue à un instant $t_2$ postérieur de 120 minutes à l'instant $t_1$. Les impulsions $S'_1(t_1)$ et $S'_1(t_2)$ correspondent au pic d'émission de $^{57}$Co, à l'énergie 122 keV. On constate que leurs amplitudes respectives $A'_1(t_1)$ et $A'_1(t_2)$ ne sont pas identiques, alors qu'elles correspondent à une même énergie. Ainsi, dans une telle configuration, basée sur une durée de mise en forme $\delta t_1$ courte, et inférieure au temps de montée $t_r$ de l'impulsion de mesure $S$, le gain de conversion, correspondant à un ratio entre l'amplitude $A'_1$ de l'impulsion mise en forme $S'_1$ et l'énergie de l'interaction ayant généré l'impulsion de mesure $S$, n'est pas stable dans le temps.

La figure 3B représente deux impulsions $S'_2(t_1)$ et $S'_2(t_2)$ mises en forme dans les mêmes conditions expérimentales que les impulsions de la figure 3A, en modifiant le temps de mise en forme. Dans le cas de la figure 3B, on a utilisé une ligne à retard basée sur un deuxième

retard $\delta t_2$ égal à 200 ns. On constate que leurs amplitudes respectives $A'_2(t_1)$ et $A'_2(t_2)$ sont identiques, ce qui atteste de la stabilité du gain de conversion dans cette configuration basée sur une durée de mise en forme $\delta t_2$ longue.

L'effet de dérive du gain de conversion en fonction la durée de mise en forme peut être observé sur les figures 3C et 3D, représentant des spectres en énergie du rayonnement émis par une source de $^{57}$Co acquis en différents instants, respectivement en adoptant une durée de mise en forme courte (50 ns) et longue (200 ns). Sur la figure 3C, la dérive du gain de conversion se traduit par un décalage progressif des spectres vers les énergies élevées. Sur la figure 3D, les différents spectres se superposent, le gain de conversion étant stable.

Il est à noter que cet effet ne dépend pas du type de circuit de mise en forme mis en œuvre. Les exemples illustrés sur les figures 3A à 3D ont été obtenus par un circuit de mise en forme de type ligne à retard. Le même effet peut être observé sur d'autres types de circuits de mise en forme, basés sur une durée de mise en forme variable. Par exemple, le circuit de mise en forme peut être un filtre permettant de générer une impulsion de forme paramétrable, par exemple une forme gaussienne, triangulaire ou trapézoïdale, ce type de circuit étant usuel dans le domaine de la spectrométrie X ou gamma. La réponse impulsionnelle d'un tel circuit est une impulsion de forme géométrique prédéterminée et paramétrable par la durée de mise en forme. L'usage de filtres gaussiens, générant une impulsion de forme gaussienne et dont la largeur à mi-hauteur est paramétrable, est courant dans le domaine de la spectrométrie gamma ou X. Le recours à de tels filtres est décrit dans la publication Salathe M. "Optimized digital filtering techniques for radiation détection with HPGe detectors". Le filtre peut également être triangulaire, la base du triangle étant paramétrable, ou trapézoïdal, la largeur du sommet de l'impulsion étant paramétrable. La figure 2C schématise par exemple une impulsion S en sortie d'un préamplificateur, ainsi que des impulsions $S''_1$ et $S''_2$ mises en forme avec un filtre trapézoïdal en considérant respectivement une première durée de mise en forme $\delta t_1$ et une deuxième durée $\delta t_2$ de mise en forme, avec $\delta t_2 > \delta t_1$.

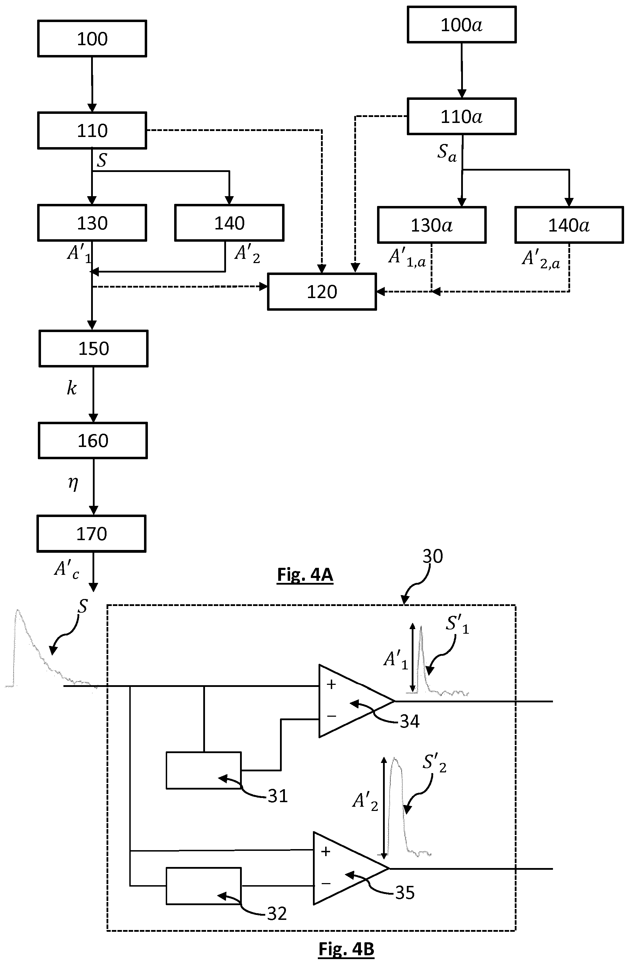

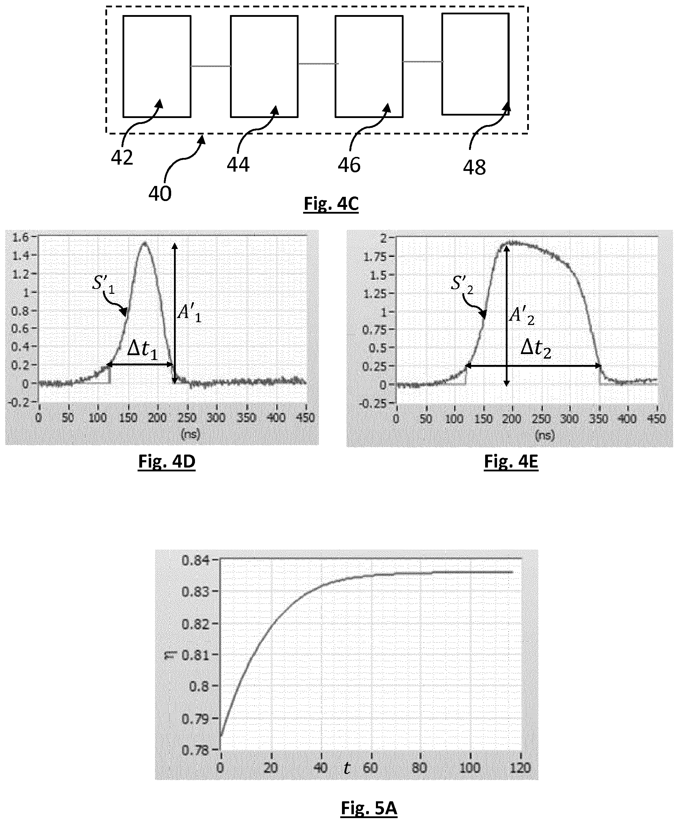

Ainsi, une durée de mise en forme $\delta t_1$ courte limite les empilements, mais s'accompagne d'une dérive temporelle du gain de conversion. Une durée de mise en forme $\delta t_2$ longue augmente la probabilité d'observer un empilement, mais bénéficie d'un gain de conversion stable. Les inventeurs ont mis à profit ce constat pour proposer un procédé dont les principales étapes sont décrites ci-après, en lien avec les figures 4A et 4C.

Etape 100 : détection : le détecteur 10 est exposé à un rayonnement ionisant incident 5, dont une particule interagit dans le détecteur pour former des porteurs de charge collectés par une électrode.

Etape 110 : préamplification : la charge collectée $Q$ est intégrée par un préamplificateur, de façon à former une impulsion S, dite impulsion de mesure, généralement dissymétrique, présentant un temps de montée $t_r$ et une décroissance exponentielle. L'impulsion de mesure est formée à un instant de mesure $t$.

Etape 130 : première mise en forme de l'impulsion de mesure S selon une première durée de mise en forme $\delta t_1$. Dans cet exemple, la mise en forme est obtenue avec un premier circuit à ligne à retard 31, comme représenté sur la figure 4B, la ligne à retard générant une impulsion retardée $S_{\delta t_1}$, comme expliqué en lien avec la figure 2A. La première ligne à retard 31 est reliée à l'entrée inverseuse d'un soustracteur 34, dont l'entrée non inverseuse reçoit l'impulsion de mesure S. La première durée de mise en forme $\delta t_1$ est inférieure au temps de montée $t_r$ de l'impulsion de mesure S en sortie du préamplificateur 20. Cette étape génère une première impulsion mise en forme $S'_1$ de première amplitude $A'_1$.

Etape 140 : deuxième mise en forme de l'impulsion de mesure S selon une deuxième durée de mise en forme $\delta t_2$. Dans cet exemple, la mise en forme est obtenue avec un deuxième circuit à ligne à retard 32 comme représenté sur la figure 4B, la ligne à retard générant une impulsion retardée $S_{\delta t_2}$, comme expliqué en lien avec la figure 2B. La deuxième ligne à retard 32 est reliée à l'entrée inverseuse d'un soustracteur 35, dont l'entrée non inverseuse reçoit l'impulsion de mesure S, issue du préamplificateur 20. La deuxième durée de mise en forme $\delta t_2$ peut être supérieure ou égale au temps de montée $t_r$ de l'impulsion de sortie S du préamplificateur 20. Cette étape génère une deuxième impulsion mise en forme $S'_2$ de deuxième amplitude $A'_2$.

Les étapes 150, 160 et 170 décrites ci-après sont mises en œuvre par le circuit de correction 40, illustré sur la figure 4C. Le circuit de correction 40 comporte une unité de comparaison 44, une unité de calcul 46 et une unité de correction 48. Il peut comporter une unité de sélection 42 lorsque l'étape facultative 120, décrite ci-après, est mise en œuvre. Le recours à l'étape 120 de sélection est toutefois recommandé.

Etape 150 : comparaison de la première et de la deuxième amplitude. Au cours de cette étape, l'unité de comparaison 44 effectue une comparaison des amplitudes $A'_1$ et $A'_2$ des impulsions respectives $S'_1$ et $S'_2$, de façon à calculer un facteur de comparaison $k$. Dans cet exemple,le facteur de comparaison $k$ est un ratio en-

$$k = \frac{A'_1}{A'_2}.$$

tre les amplitudes $A'_1$ et $A'_2$. par exemple

L'objectif des étapes suivantes est multiplier la première

amplitude mesurée $A'_1$ par un facteur de correction $\frac{1}{\eta}$, de façon à compenser la dérive temporelle du gain de conversion. Le facteur de correction $\eta$ peut être égal au facteur de comparaison $k$. Cependant, les inventeurs ont estimé qu'il était préférable d'établir un facteur de correction à partir de facteurs de comparaison $k$ respectivement calculés pour un certain nombre d'impulsions, dites impulsions d'intérêt.

Etape 160 : calcul du facteur de correction. A partir du facteur de comparaison k calculé lors de l'étape 150, l'unité de calcul 46 détermine un facteur de correction $\eta$. Le facteur de correction $\eta$ est déterminé en fonction de facteurs de comparaison $k_1 .... k_N$ respectivement obtenus en appliquant les étapes 110 à 150 à des impulsions $S_1 .... S_N$, dites impulsions d'intérêt, formées préalablement et/ou postérieurement à l'impulsion de mesure $S$. Autrement dit, si $t$ désigne l'instant de mesure, auquel l'impulsion de mesure $S$ est formée, les impulsions d'intérêt sont formées par le détecteur antérieurement ou postérieurement à l'instant de mesure $t$. Le terme impulsion d'intérêt désigne une impulsion générée par le détecteur, antérieurement ou postérieurement à l'impulsion de mesure $S$, et dont on conserve le facteur de comparaison. Le facteur de correction $\eta$ peut être calculé en fonction de la valeur moyenne ou de la valeur médiane des facteurs de comparaison déterminés pour différentes impulsions d'intérêt antérieures à l'impulsion de mesure, et mémorisés dans l'unité de calcul 46, auxquels on ajoute le facteur de comparaison k établi pour l'impulsion de mesure $S$, calculé lors de l'étape 150. Dans cet exemple, $\eta = mean\ (k_1, ...., k_N, k)$. Les impulsions d'intérêt $S_1 .... S_N$ sont les $N$ impulsions s'étendant au cours d'une plage temporelle $\Delta t$ dite plage temporelle d'intérêt, cette plage temporelle s'étendant postérieurement et/ou antérieurement à l'instant de mesure $t$ auquel l'impulsion de mesure $S$ est formée. Le nombre $N$ est un entier désignant le nombre d'impulsions d'intérêt utilisées pour déterminer le facteur de correction. Il peut être compris entre 1 et 10000, voire davantage. L'application du facteur de correction $\eta$ à l'amplitude de l'impulsion $S'_1$ mise en forme selon un intervalle temporel court $\delta t_1$ permet de corriger la dérive temporelle du gain de conversion du détecteur, comme décrit en lien avec les figures 3A et 3D. Plus N est élevé, plus la moyenne des facteurs de comparaison est stable et peu sensible au bruit de détection. Un nombre $N$ trop élevé peut nuire à la précision du suivi de l'évolution du gain du détecteur. Le nombre $N$ peut être déterminé par l'homme du métier, en fonction d'essais expérimentaux permettant d'apprécier l'évolution du gain de conversion. Selon ce mode de réalisation, la plage temporelle d'intérêt $\Delta t$ s'étend avant, autour de, ou après l'instant de mesure $t$, la durée de la plage temporelle d'intérêt pouvant être par exemple de 1 seconde ou de quelques secondes. D'une façon générale, la durée de la plage temporelle d'intérêt $\Delta t$ est définie de telle sorte qu'on puisse considérer que durant cette plage, le gain de conversion du détecteur n'évolue pas, ou de façon négligeable.

Selon un mode de réalisation, après la mise en service du détecteur 10, lors de la première impulsion, aucun facteur de comparaison n'a été mesuré. Dans ce cas, $N = 0$. Le premier facteur de correction n'est déterminé qu'en fonction du facteur de comparaison calculé pour l'impulsion de mesure. Puis, au fur et à mesure du traitement de chaque impulsion de mesure S, le nombre

$N$ est incrémenté à chaque impulsion de mesure, jusqu'à atteindre une valeur maximale $N_{max}$ prédéterminée. Le facteur de correction $\eta$ est ensuite déterminé en effectuant une moyenne (ou médiane) glissante des $N_{max}$ facteurs de comparaison respectivement déterminés pour les $N_{max}$ impulsions d'intérêt antérieures à l'impulsion de mesure.

Selon une variante, après la mise en service du détecteur, le nombre N d'impulsions d'intérêt dont le facteur de comparaison est pris en compte pour le calcul du facteur de correction est fixé à une valeur prédéterminée. Aucun facteur de correction n'est appliqué aux impulsions de mesure, jusqu'à ce qu'on dispose de N impulsions d'intérêt dont le facteur de comparaison est déterminé. A partir de cet instant, le facteur de correction est déterminé en effectuant une moyenne glissante des $N$ facteurs de comparaison respectivement déterminés pour les $N$ impulsions d'intérêt.

Les impulsions d'intérêt peuvent être réparties selon une plage temporelle d'intérêt s'étendant avant et après l'impulsion de mesure $S$. Il peut par exemple s'agit de $\dfrac{N_{max}}{2}$ impulsions acquises avant l'impulsion de mesure et de $\dfrac{N_{max}}{2}$ impulsions acquises après l'impulsion de mesure. Dans ce cas, les étapes 160 et 170 sont mises en œuvre en post-traitement, c'est-à-dire après la plage temporelle d'intérêt $\Delta t$. La correction est alors différée par rapport à l'instant de mesure $t$. Selon une autre variante, le facteur de correction $\eta$ est déterminé sans prendre en compte le facteur de comparaison de l'impulsion de mesure, mais uniquement sur la base des facteurs de comparaison respectivement déterminés à partir d'impulsions d'intérêt.

Etape 170 : correction. Le facteur de correction $\eta$ est appliqué à la première impulsion mise en forme $S'_1$, dont l'amplitude $A'_1$ est multipliée par $\dfrac{1}{\eta}$. On obtient alors une amplitude corrigée

$$A'_c = \frac{1}{\eta} A'_1 .$$

La correction est effectuée par une unité de correction 48 du circuit de traitement 40. L'unité de correction utilise le facteur de correction $\eta$ calculé par l'unité de calcul 46.

A l'issue de l'étape 170, les étapes 100 à 170 sont réitérées lors de la détection d'une autre impulsion de mesure $S$.

Selon une variante, chaque facteur de comparaison comporte une différence normalisée entre les amplitudes $A'_2$ et $A'_1$. Ainsi, chaque facteur de comparaison $k$ est tel que

$$k = \frac{A'_2 - A'_1}{A'_1}.$$

Une moyenne des facteurs de comparaison est effectuée, de façon à obtenir un facteur de correction $\eta$, l'amplitude corrigée $A'_c$ étant telle que $A'_c = A'_1 + \eta\, A'_1 = A'_1 (1 + \eta)$.

Ainsi, le procédé décrit en lien avec les étapes 100 à 170 permet de déterminer une amplitude $A'_1$ d'impulsions $S'_1$ mises en forme selon une durée de mise en forme courte, ce qui est compatible avec une utilisation du détecteur en fort taux de comptage. L'impulsion ainsi mise en forme est corrigée, de façon à atténuer, voire éliminer l'effet de dérive du gain de conversion mis en évidence par les inventeurs. L'avantage est d'utiliser une durée de mise en forme courte, propice aux forts taux de comptage, tout en limitant l'inconvénient lié à l'instabilité temporelle du gain de conversion.

Selon un mode de réalisation préféré, le procédé comporte une étape 120 de sélection des impulsions pour lesquelles on détermine les facteurs de comparaison $k$ : il s'agit des impulsions d'intérêt et éventuellement de l'impulsion de mesure. L'étape 120 est mise en œuvre par l'unité de sélection 42. L'objectif est d'éviter de prendre en compte des facteurs de comparaison issus d'impulsions formées suite à un empilement de deux interactions provenant de deux particules différentes, ou d'impulsions résultant d'une collecte des porteurs de charges partagée entre deux électrodes adjacentes, lorsque le détecteur est relié à plusieurs électrodes comme représenté sur la figure 1B. La sélection permet de ne retenir que des impulsions formée par une seule particule, et collectée par une seule électrode. La sélection est décrite ci-après en lien avec une impulsion de mesure, sachant qu'elle peut être effectuée pour chaque impulsion d'intérêt.

Pour détecter la présence d'un empilement, l'unité de sélection 42 applique un ou plusieurs critères de sélection à l'impulsion de mesure S issue du préamplificateur 20, ou à la première ou la deuxième impulsion mise en forme. Un critère de sélection peut être une durée de la première impulsion mise en forme $S'_1$ et/ou ou de la deuxième impulsion mise en forme $S'_2$ au-dessus d'un seuil prédéfini. Ce critère de sélection est illustré sur les figures 4D et 4E. Sur la figure 4D, on a représenté une impulsion $S'_1$ mise en forme par le premier circuit de mise en forme, en considérant le premier intervalle temporel court $\delta t_1$ de 50 ns. La durée $\Delta t_1$ de l'impulsion $S'_1$ en dessus d'un seuil d'amplitude égal à 0.2 est matérialisée par une double flèche. Lorsque la durée $\Delta t_1$ dépasse une durée maximale, par exemple 80 ns, on considère que l'impulsion résulte d'un empilement et l'impulsion est rejetée. Sur la figure 4E, on a représenté une impulsion $S'_2$ mise en forme par le deuxième circuit de mise en forme, en considérant le deuxième intervalle temporel $\delta t_2$ de 200 ns. La durée de l'impulsion $\Delta t_2$ en dessus d'un seuil d'amplitude égal à 0.2 est matérialisée par une double flèche. Lorsque la durée $\Delta t_2$ de l'impulsion $S'_2$ dépasse une durée maximale, par exemple 230 ns, on considère que l'impulsion résulte d'un empilement et l'impulsion est rejetée.

Un autre critère de sélection peut se baser sur le temps de montée $t_r$ d'une impulsion de mesure $S$, ou sur le temps de montée (peaking time) $t'_{r,1}$ d'une impulsion $S'_1$ mise en forme par le premier circuit de mise en forme, ou sur le temps de montée (peaking time) $t'_{r,2}$ d'une impulsion $S'_2$ mise en forme par le deuxième circuit de mise en forme. Lorsqu'au moins un de ces temps de montée dépasse une certaine valeur, l'impulsion correspondante est rejetée.

Lorsque le détecteur est relié à plusieurs électrodes de collecte, comme représenté sur la figure 1B, un critère de sélection est une détection coïncidente d'une impulsion sur une électrode adjacente $11_a$. Lors d'une interaction, la charge $Q$ générée peut être collectée par une électrode 10 tandis qu'une charge complémentaire est collectée par une électrode adjacente $11_a$, au cours d'une étape $100_a$. On est alors en présence d'un partage de charges, la charge collectée par chaque électrode n'étant pas représentative de l'énergie déposée dans le détecteur au cours de l'interaction. Après préamplification (étape $110_a$), la charge complémentaire $Q_a$ est intégrée par un préamplificateur $20_a$ au cours d'une étape $120_a$, de façon à former une impulsion adjacente $S_a$. L'impulsion adjacente $S_a$ est mise en forme par l'amplificateur adjacent $30_a$ de façon à obtenir une première impulsion adjacente mise en forme $S'_{1,a}$ selon la première durée de mise en forme $\delta t_1$ (étape $130_a$) et une deuxième impulsion adjacente $S'_{2,a}$ mise en forme selon la deuxième durée de mise en forme $\delta t_2$ (étape $140_a$). L'unité de sélection 42 détecte la présence de l'impulsion adjacente $S_a$ et/ou la première impulsion adjacente mise en forme $S'_{1,a}$ et/ou la deuxième impulsion mise en forme adjacente $S'_{2,a}$. Lorsque au moins une de ces impulsions survient simultanément à l'impulsion de mesure S issue de l'électrode de collecte 10, ou à la première impulsion mise en forme $S'_1$, ou à la deuxième impulsion mise en forme $S'_2$, on considère qu'un partage de charges a eu lieu et l'impulsion de mesure $S$ est rejetée. Pour cela, l'unité de sélection compare les amplitudes $A'_{1,a}$ et $A'_{2,a}$ des impulsions $S'_{1,a}$ et $S'_{2,a}$ à un seuil prédéterminé. Lorsqu'une amplitude dépasse le seuil, on est en présence d'une détection coïncidente. Par en coïncidence, on entend survenant à deux instants suffisamment rapprochés, par exemple dans une plage temporelle dite de coïncidence $T_d$ de 10 ou 20 ns autour de l'instant de détection $t_d$ d'une impulsion d'intérêt.

L'unité de sélection 42 peut également se baser sur d'autres critères de sélection, par exemple:

- la présence d'un point d'inflexion sur l'impulsion de mesure S ou sur une impulsion mise en forme $S'_1$ ou $S'_2$, une telle présence pouvant indiquer un empilement.
- Un ratio entre l'amplitude ($A'_1$ ou $A'_2$) d'une impulsion mise en forme ($S'_1$ ou $S'_2$) sur l'intégrale de ladite impulsion. Un ratio trop élevé peut indiquer la présence d'un empilement.
- Une amplitude de l'impulsion de mesure S ou d'une impulsion mise en forme ($S'_1$ ou $S'_2$) inférieure à une valeur seuil prédéterminée, en dessous de laquelle l'impulsion est considérée comme non significative, et causée par un bruit.
- Un taux de comptage trop élevé, le taux de comptage représentant le nombre d'impulsions détectées par unité de temps.

Ainsi, l'unité de sélection 42 se base sur un ou plusieurs critères de sélection pour rejeter des impulsions non représentatives de la charge déposée par une interaction d'une particule dans le milieu détecteur 10. Ces impulsions indésirables ne sont pas prises en compte dans le calcul du facteur de correction $\eta$. L'étape de sélection 120 permet d'obtenir un facteur de correction indépendant du taux de comptage du détecteur. Les impulsions sélectionnées par l'unité de sélection 42 sont traitées par l'unité de comparaison 44, l'unité de calcul 46 et l'unité de correction 48.

Le dispositif expérimental précédemment décrit a été soumis à une irradiation prolongée, la source d'irradiation étant un générateur de rayons X porté à une tension de 120 kV. La figure 5A représente l'évolution du facteur de correction $\eta$ en fonction du temps, à partir de la mise en tension du détecteur ($t$ = 0) jusqu'à 2 heures après cette mise sous tension ($t$ = 120 minutes). Le facteur de correction a été calculé en effectuant une moyenne glissante de 1024 facteurs de comparaison. On observe que le facteur de correction $\eta$ varie entre une valeur initiale d'environ 0,785 à une valeur finale voisine de 0,835. Cette courbe montre la pertinence de considérer un facteur de correction variable dans le temps.

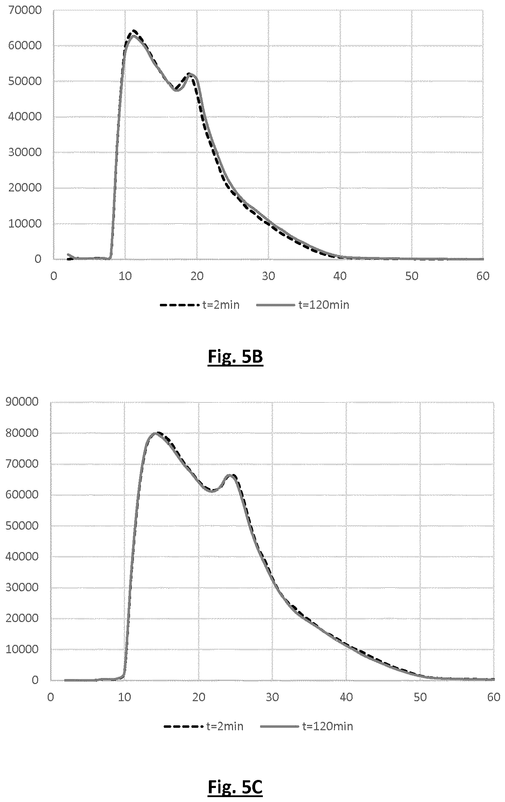

La figure 5B montre des spectres du rayonnement 5 émis par le générateur de rayons X et détecté par le détecteur 10 respectivement à $t$ = 2 min et à $t$ = 120 min après la mise en service d'un détecteur 10, avec mise en forme des impulsions avec le premier circuit de mise en forme, basé sur une durée de mise en forme de 50 ns, sans correction des impulsions. On observe une dérive spectrale vers les énergies élevées. La figure 5C montre des spectres du rayonnement 5 détecté par le détecteur 10 respectivement à $t$ = 2 min et à $t$ = 120 min, avec mise en œuvre des étapes 100 à 170, c'est-à-dire en corrigeant chaque impulsion mise en forme par le premier circuit de mise en forme, en appliquant le facteur de correction représenté sur la figure 5A. On observe que les deux spectres ne sont pas décalés l'un par rapport à l'autre, mais se superposent, ce qui atteste de la fiabilité de la correction.

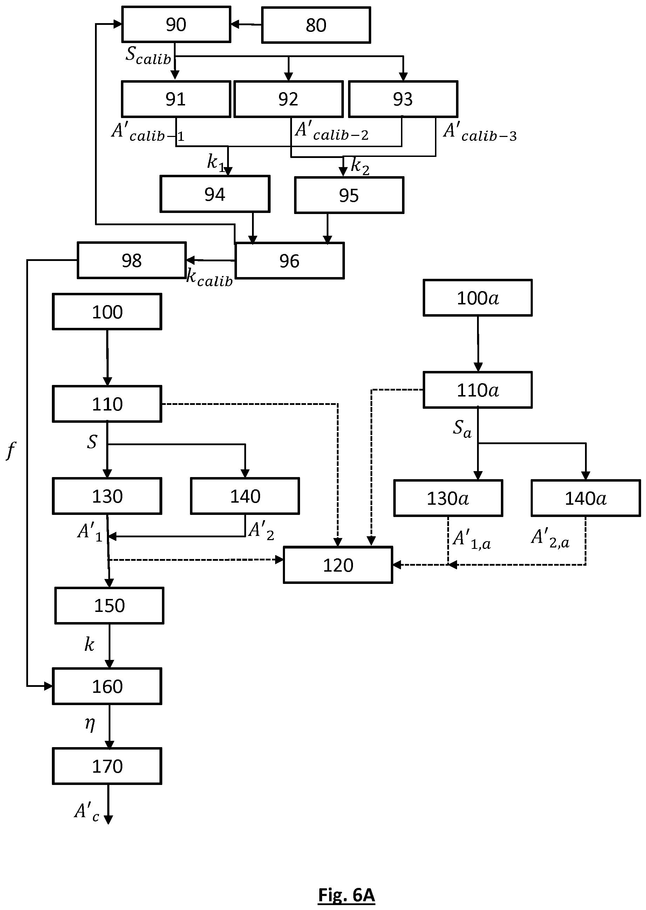

La figure 6A représente un autre mode de réalisation d'un procédé selon l'invention. Les étapes 100, 110, 120, 130, 140, 100$_a$, 110$_a$, 120$_a$, 130$_a$ et 140$_a$ sont identiques à celles décrites en lien avec la figure 4A. Selon ce mode de réalisation, la première durée de mise en forme $\delta t_1$ et la deuxième durée de mise en forme $\delta t_2$ sont inférieures au temps de montée $t_r$ de l'impulsion de mesure $S$. Par exemple, $\delta t_1$ = 50 ns et $\delta t_2$ = 30 ns. Au cours de l'étape 150, le circuit de comparaison 44 détermine un facteur de comparaison k par comparaison entre les amplitudes $A'_1$ et $A'_2$, par exemple $k = \frac{A'_1}{A'_2}$. On note que dans cet exemple, $\delta t_2 > \delta t_1$.

Au cours de l'étape 160, à partir du facteur de comparaison k établi pour l'impulsion de mesure, le circuit de correction 46 détermine un facteur de correction $\eta$ de telle sorte que $\eta = f(k)$. La fonction f est obtenue au cours d'une phase préalable de calibration, décrite en lien avec les étapes 90 à 98.

Au cours de l'étape 170, l'unité de correction applique le facteur de correction $\eta$ à la première impulsion mise en forme $S'_1$, de telle sorte que $A'_c = \frac{1}{\eta} A'_1$.

Une première différence entre ce mode de réalisation et le précédent mode de réalisation, représenté sur la figure 4A, est que les circuits de mise en forme sont basées sur des durées de mise en forme plus courtes que le temps de montée $t_r$ de l'impulsion de mesure $S$ issue du préamplificateur 20. Cela permet de limiter les empilements et ce mode de réalisation est donc bien adapté aux forts taux de comptage.

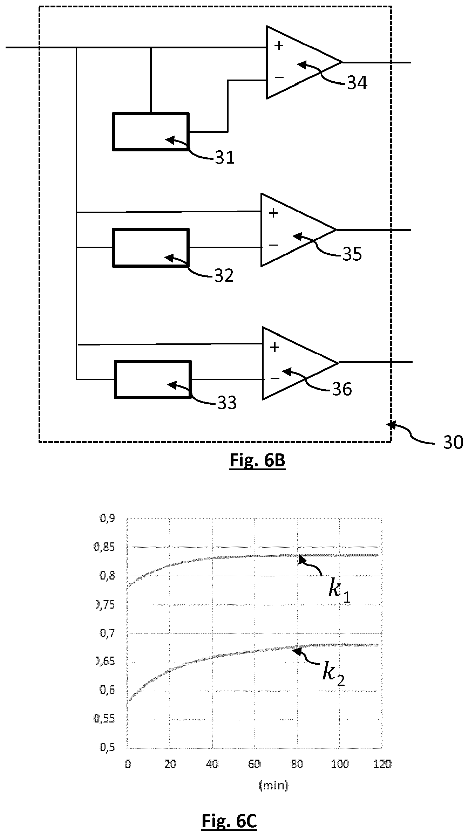

Une deuxième différence est que ce mode de réalisation suppose une phase de calibration préalable, décrite en lien avec les étapes 80 à 98. Cette phase de calibration correspond à une plage temporelle d'intérêt $\Delta t$, au cours de laquelle des impulsions d'intérêt sont acquises de façon à disposer de facteurs de comparaison. Dans le mode de réalisation précédent, les impulsions d'intérêt sont des impulsions de mesure formées au cours d'une même séquence de mesure, antérieurement et/ou postérieurement à chaque impulsion de mesure, en utilisant la même source d'irradiation. Selon le présent mode de réalisation, les impulsions d'intérêt sont formées au cours d'une phase de calibration préalable. Cette phase de calibration est préférentiellement mise en œuvre en utilisant une source de calibration n'exposant pas le détecteur à un rayonnement incident trop intense, de façon à ce que le taux de comptage soit faible, ce qui limite la probabilité de détection d'empilements. Au cours de la phase de calibration, l'amplificateur 30 comporte trois circuits de mise en forme, comme décrit sur la figure 6B :

- un premier circuit de mise en forme, basé sur une première durée de mise en forme $\delta t_1$, et, de préférence $\delta t_1 < t_r$. Dans cet exemple, $\delta t_1$ = 50 ns.
- un deuxième circuit de mise en forme, basé sur une deuxième durée de mise en forme $\delta t_2$ avec $\delta t_2 \neq \delta t_1$ et, de préférence, $\delta t_2 < t_r$. Dans cet exemple, $\delta t_2$ = 30 ns.
- un troisième circuit de mise en forme, basé sur une troisième durée de mise en forme $\delta t_3$ avec $\delta t_3 > \delta t_2$, $\delta t_3 > \delta t_1$, de préférence, $\delta t_3 \geq t_r$. Dans cet exemple, $\delta t_3$ = 200 ns.

Dans l'exemple représenté sur la figure 6B, les premier, deuxième et troisième circuits de mise en forme sont respectivement des circuits à ligne à retard comportant respectivement la première ligne à retard 31 et la deuxième ligne à retard 32 décrites en lien avec les figures 1C et 1D, ainsi qu'une troisième ligne à retard 33 appliquant un retard temporel égal à $\delta t_3$ à l'impulsion $S$ issue du préamplificateur 20. Le troisième circuit de mise en forme est relié à l'entrée inverseuse d'un soustracteur 36, dont l'entrée non inverseuse reçoit l'impulsion $S$ résutant du préamplificateur 20.

L'étape de calibration est à présent décrite, en lien avec les étapes 80 à 98.

Etape 80 : détection : le détecteur est exposé à un rayonnement ionisant incident, dont une particule interagit dans le détecteur pour former des porteurs de charge $Q$ collectés par une électrode.

Etape 90 : préamplification : la charge collectée est intégrée dans un préamplificateur, de façon à former une impulsion de calibration $S_{calib}$.

Etape 91 : première mise en forme de l'impulsion de calibration $S_{calib}$ générée par le préamplificateur, selon la première durée de mise en forme $\delta t_1$, de façon à obtenir une première amplitude mise en forme $S'_{calib-1}$ de première amplitude $A'_{calib-1}$.

Etape 92 : deuxième mise en forme de l'impulsion de calibration $S_{calib}$ générée par le préamplificateur, selon la deuxième durée de mise en forme $\delta t_2$ de façon à obtenir une deuxième amplitude mise en forme $S'_{calib-2}$ de deuxième amplitude $A'_{calib-2}$.

Etape 93 : troisième mise en forme de l'impulsion de calibration $S_{calib}$ générée par le préamplificateur, selon la troisième durée de mise en forme $\delta t_3$ de façon à obtenir une troisième amplitude mise en forme $S'_{calib-3}$ de troisième amplitude $A'_{calib-3}$.

Etape 94 : calcul d'un premier facteur de comparaison $k_1$ par comparaison entre la première amplitude $A'_{calib-1}$ et la troisième amplitude $A'_{calib-3}$. Par exemple,

$$k_1 = \frac{A'_{calib-1}}{A'_{calib-3}}.$$ Le premier facteur de comparaison $k_1$

est appelé par la suite facteur de comparaison auxiliaire.

Etape 95 : calcul d'un deuxième facteur de comparaison $k_2$ par comparaison entre la deuxième amplitude de $A'_{calib-2}$ et la troisième amplitude $A'_{calib-3}$. Par exemple,

$$k_2 = \frac{A'_{calib-2}}{A'_{calib-3}}.$$

Etape 96 : réitération des étapes 90 à 95, de manière à établir une succession de couples $(k_1, k_2)$ en fonction du temps. La figure 6C représente une évolution temporelle, selon une durée de 120 minutes, du premier facteur de comparaison $k_1$ et du deuxième facteur de comparaison $k_2$.

Etape 98 : élaboration de la fonction de correction. Il s'agit d'établir une fonction de correction $f$, permettant d'établir une relation entre le ratio $\frac{k_1}{k_2}$ et le premier facteur de correction, dit facteur de correction auxiliaire $k_1$. On remarque que

$$\frac{k_1}{k_2} = \frac{\frac{A'_{calib-1}}{A'_{calib-3}}}{\frac{A'_{calib-1}}{A'_{calib-3}}} = \frac{A'_{calib-1}}{A'_{calib-2}}.$$ Le ratio $\frac{k_1}{k_2}$ correspond à une amplitude mise en forme par le premier circuit de mise en forme sur une amplitude mise en forme par le deuxième circuit de mise en forme. Il correspond donc au facteur de comparaison k précédemment décrit, si ce n'est qu'il est établi pour les impulsions de calibration. Il est noté $k_{calib}$.

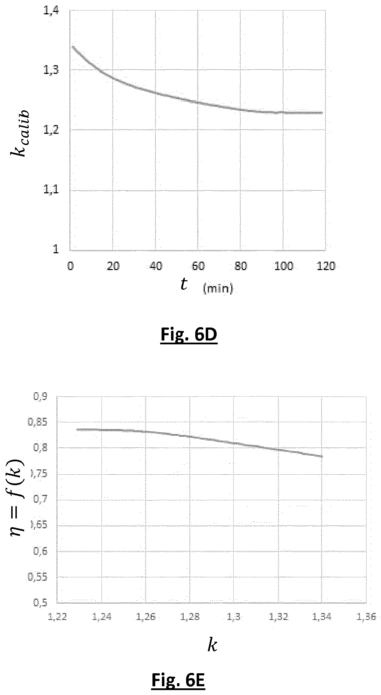

La figure 6D, obtenue à partir des données de la figure 6C, permet d'établir une évolution temporelle du ratio $k_{calib} = \frac{k_1}{k_2}$. Or, le premier facteur de comparaison $k_1$ correspond au facteur de correction $\eta$, permettant de corriger chaque première amplitude $A'_1$ de façon à obtenir une amplitude corrigée $A_c$, pour estimer une amplitude mise en forme avec une durée de mise en forme longue, c'est-à-dire supérieure ou égale au temps de montée $t_r$. Par ailleurs, l'évolution temporelle de $k_1$ est connue (cf. figure 6C). En croisant les données des figures 6C et 6D, on peut obtenir une fonction de correction $f$ en déterminant l'évolution, sur plusieurs impulsions de calibration, d'une moyenne (ou d'une médiane) de facteurs de correction auxiliaire $k_1$ en fonction d'une moyenne (ou d'une médiane) de facteurs de calibration $k_{calib}$. La fonction de correction $f$ représente l'évolution du facteur de correction $\eta$ en fonction du facteur de comparaison $k$. Cette fonction est représentée sur la figure 6E. Elle résulte de la phase de calibration.

A partir de la fonction de correction $f$, connaissant le facteur de comparaison $k$ d'une impulsion de mesure, on obtient le facteur de correction $\eta$ selon l'expression $\eta = f(k)$. La correction est alors effectuée de telle sorte que l'amplitude corrigée $A'_c$ est telle que

$$A'_c = \frac{1}{\eta} A'_1.$$ Selon une variante, le facteur de comparaison $k$ calculé lors de l'étape 150 est tel que $$k = \frac{A'_2}{A'_1}.$$ Dans ce cas, on détermine, pour chaque impulsion de calibration, $$k_{calib} = \frac{A'_2}{A'_1}.$$ Lors de la calibration, on détermine l'évolution du deuxième facteur de comparaison $k_2$ en fonction de ratio $k_{calib}$, de façon à obtenir la fonction de correction $f$. Le deuxième facteur de comparaison correspond alors au facteur de correction auxiliaire. Lors de l'étape 160, on détermine le facteur de correction $\eta = f(k_{calib})$ et lors de l'étape 170, la correction est réalisée en appliquant le facteur de correction $\eta$ à la deuxième

amplitude corrigée $A'_2$ de telle sorte que $$A'_c = \frac{1}{\eta} A'_2.$$

D'une façon générale, le premier facteur de comparaison $k_1$ ou le deuxième facteur de comparaison $k_2$ sont désignés par le terme facteur de comparaison auxiliaire.

Selon un mode de réalisation, le procédé comporte l'acquisition d'impulsions de mesure S, durant une période d'acquisition $T_a$, les impulsions de mesure $S'_1$ traitées par le premier circuit de mise en forme étant classées en fonction de leurs amplitudes $A'_1$ respectives, de façon à former un spectre $Sp$. Le spectre $Sp$ correspond à un histogramme des amplitudes des impulsions traitées par le premier circuit de mise en forme. Par ailleurs, chaque impulsion de mesure S est également traitée par le deuxième circuit de mise en forme, de telle sorte qu'on dispose d'un facteur de comparaison $k$ pour chaque impulsion de mesure. Selon ce mode de réalisation, la plage temporelle d'intérêt $\Delta t$ correspond à la période d'acquisition $T_a$. Un facteur de correction $\eta$ est défini pour la plage temporelle d'intérêt $\Delta t$ à partir des facteurs de comparaison. La correction est appliquée non pas successivement, à chaque amplitude acquise, mais simultanément, en corrigeant le spectre $Sp$, de telle sorte que :

$$Sp_c(i') = Sp(\eta \times i) \times n,$$

où :

- $Sp_c$ est le spectre corrigé ;
- $i'$ est un canal du spectre corrigé ;
- $\eta$ est le facteur de correction, qui est déterminé en fonction des facteurs de correction respectivement calculés pour les impulsions composant le spectre;
- $n$ est un terme de normalisation, défini de telle sorte que l'intégrale du spectre corrigé $Sp_c$ corresponde à l'intégrale du spectre non corrigé $Sp$. Par exemple,

$$n = \frac{\sum Sp_c(i')}{\sum Sp(i)}$$

- $i$ est un canal du spectre $Sp$ avant la correction.

La correction revient à recaler le spectre Sp dans le sens des canaux plus faibles, de manière à corriger la dérive spectrale résultant de l'augmentation progressive du gain de conversion.

Ce mode de réalisation suppose que le gain de conversion soit stable durant la période d'acquisition $T_a$ du spectre $Sp$. Ce mode de réalisation permet de corriger simultanément les amplitudes $A'_1$ mises en forme par le premier circuit de mise en forme.

Par ailleurs, comme précédemment évoqué, quel que soit le mode de réalisation, le procédé peut comporter une étape de numérisation, par exemple entre le préamplificateur et l'amplificateur, soit entre l'amplificateur et le circuit de correction, soit en aval de ce dernier.

L'invention pourra être mise en œuvre dans des applications de mesure en fort taux de comptage, les applications pouvant se situer dans le contrôle non destructif, le contrôle de bagages, le nucléaire ou le domaine du diagnostic ou du suivi de traitement médical.

**Revendications**

1. Procédé de traitement d'une impulsion ($S$) générée par un détecteur (10) de rayonnement ionisant, le détecteur (10) étant apte à interagir avec un rayonnement ionisant (5) pour générer ladite impulsion, dont l'amplitude ($A$) dépend d'une énergie libérée par le rayonnement ionisant lors de son interaction dans le détecteur, le procédé comportant les étapes suivantes :

   a) exposition du détecteur à une source de rayonnement ionisant (2) de façon à obtenir, à un instant de mesure ($t$), une impulsion ($S$), dite impulsion de mesure ;
   b) mise en forme de l'impulsion de mesure, en considérant une première durée de mise en forme ($\delta t_1$), et détermination d'une première amplitude ($A'_1$) de l'impulsion de mesure ainsi mise en forme ;
   c) correction de la première amplitude déterminée lors de l'étape b), en prenant en compte un facteur de correction ($\eta$), de façon à obtenir une amplitude corrigée ($A'_c$) ;

   le facteur de correction ($\eta$) étant déterminé en prenant en compte des impulsions, dites impulsions d'intérêt ($S_1$ .... $S_N$, $S_{calib}$), formées par le détecteur au cours d'une exposition à la source ou à une source de calibration, préalablement et/ou postérieurement à l'impulsion de mesure S, durant une plage temporelle d'intérêt ($\Delta t$), la détermination du facteur de correction comportant, pour chaque impulsion d'intérêt, les étapes suivantes :

   i) première mise en forme de l'impulsion d'intérêt, en considérant la première durée de mise en forme ($\delta t_1$), et mesure d'une première amplitude de l'impulsion d'intérêt ainsi mise en forme ;
   ii) deuxième mise en forme de l'impulsion d'intérêt, en considérant une deuxième durée de mise en forme ($\delta t_2$), différente de la première durée de mise en forme, et mesure d'une deuxième amplitude de l'impulsion d'intérêt ainsi mise en forme ;
   iii) comparaison de la première amplitude et de la deuxième amplitude de l'impulsion d'intérêt, de façon à calculer un facteur de comparaison ($k$, $k_1$, ...., $k_N$, $k_{calib}$);

   le facteur de correction ($\eta$) étant déterminé en fonction des facteurs de comparaison ($k$, $k_1$,....,$k_N$, $k_{calib}$) calculés, lors de l'étape iii), pour chaque impulsion d'intérêt.

2. Procédé selon l'une quelconque des revendications précédentes, comportant également :

- une deuxième mise en forme de l'impulsion de mesure, en considérant la deuxième durée de mise en forme ($\delta t_2$), et une détermination d'une deuxième amplitude ($A'_2$) de l'impulsion de mesure ainsi mise en forme ;

- une comparaison de la première amplitude et de la deuxième amplitude de l'impulsion de mesure, de façon à calculer, pour l'impulsion de mesure, un facteur de comparaison ($k$);

de telle sorte que le facteur de correction ($\eta$) est également déterminé en fonction du facteur de comparaison ($k$) calculé pour l'impulsion de mesure.

3. Procédé selon l'une quelconque des revendications précédentes, dans lequel lors de l'étape iii), le facteur de correction ($\eta$) est déterminé en fonction d'une valeur moyenne ou d'une valeur médiane des facteurs de comparaison respectivement calculés pour chaque impulsion d'intérêt.

4. Procédé selon l'une quelconque des revendications précédentes, dans lequel la plage temporelle d'intérêt ($\Delta t$) s'étend en deçà et/ou au-delà de l'instant de mesure ($t$).

5. Procédé selon l'une quelconque des revendications 1 à 3, dans lequel la plage temporelle d'intérêt ($\Delta t$) correspond à une phase de calibration, au cours de laquelle le détecteur est exposé à une source de calibration, le procédé étant tel que lors de l'étape iii), la détermination du facteur de correction comporte également, pour chaque impulsion d'intérêt ($S_{calib}$), les étapes suivantes :

iv) troisième mise en forme de l'impulsion d'intérêt, en considérant une troisième durée de mise en forme ($\delta t_3$), la troisième durée de mise en forme étant strictement supérieure à la deuxième durée de mise en forme ($\delta t_2$) et à la première durée de mise en forme ($\delta t_1$), et détermination d'une troisième amplitude ($A'_{calib-3}$) de l'impulsion d'intérêt ainsi mise en forme ;

v) comparaison de la troisième amplitude avec la première amplitude de l'impulsion d'intérêt résultant de l'étape i) ou avec la deuxième amplitude de l'impulsion d'intérêt, résultant de l'étape ii), de façon à calculer un facteur de comparaison dit auxiliaire ($k_1$, $k_2$);

la détermination du facteur de correction comportant également l'établissement d'une fonction de correction ($f$), représentant l'évolution du facteur de comparaison ($k_{calib}$) déterminé pour des impulsions d'intérêt ($S_{calib}$) en fonction du facteur de comparaison auxiliaire déterminé pour lesdites impulsions d'intérêt, le procédé comportant également :

- une deuxième mise en forme de l'impulsion de mesure, en considérant la deuxième durée de mise en forme ($\delta t_2$), et une détermination d'une deuxième amplitude de l'impulsion de mesure ($A'_2$);

- une comparaison de la première amplitude ($A'_1$) et de la deuxième amplitude ($A'_2$) de l'impulsion de mesure, de façon à calculer, pour l'impulsion de mesure, un facteur de comparaison ($k$);

de telle sorte que lors de l'étape c) le facteur de correction ($\eta$) est déterminé en fonction d'une valeur de la fonction de correction ($f$) également correspondant au facteur de comparaison ($k$) calculé pour l'impulsion de mesure.

6. Procédé selon l'une quelconque des revendications 1 à 4, dans lequel :

- les étapes a) et b) sont mises en œuvre pour une pluralité d'impulsions de mesure, durant une période d'acquisition ($T_a$), le procédé comportant une étape b') de formation d'un spectre ($Sp$), représentant un histogramme des premières amplitudes ($A'_1$) mises en forme lors de chaque étape b) ;

- les étapes i) à iii) sont effectuées pour chaque impulsion acquise durant la période d'acquisition ($T_a$), de telle sorte que la plage temporelle d'intérêt ($\Delta t$) corresponde à la période d'acquisition ;

- lors de l'étape c), le procédé comporte un recalage du spectre ($Sp$) formé lors de l'étape b'), en prenant en compte le facteur de correction ($\eta$) calculé lors de l'étape iii), de façon à former un spectre corrigé ($Sp_c$).

7. Procédé selon l'une quelconque des revendications précédentes, dans lequel la détermination du facteur de correction comporte une étape de sélection des impulsions d'intérêt, l'étape de sélection comportant, pour chaque impulsion d'intérêt:

- une détermination d'un critère de l'impulsion d'intérêt ou de l'impulsion résultant de la première ou de la deuxième mise en forme de l'impulsion d'intérêt;

- une comparaison du critère avec une valeur seuil ;

- une sélection de l'impulsion d'intérêt en fonction de la comparaison ;

de telle sorte que les étapes i) à iii) sont mises en oeuvre uniquement pour les impulsions d'intérêt ainsi sélectionnées.

8. Procédé selon la revendication 7, dans lequel l'étape de sélection comporte :

- une détermination d'une durée de l'impulsion d'intérêt résultant de la première ou de la deuxième mise en forme ;
- une comparaison de la durée déterminée avec une durée seuil ;
- une sélection de l'impulsion d'intérêt en fonction de la comparaison.

**9.** Procédé selon la revendication 7, dans lequel l'étape de sélection comporte :

- une détermination d'une aire et d'une amplitude de l'impulsion résultant de la première ou de la deuxième mise en forme de l'impulsion d'intérêt ;
- le calcul d'un ratio entre l'aire et l'amplitude ainsi déterminées ;
- une comparaison du ratio avec une valeur de ratio seuil ;
- une sélection de l'impulsion d'intérêt en fonction de la comparaison.

**10.** Procédé selon la revendication 7, dans lequel l'étape de sélection comporte une détermination de la dérivée temporelle seconde de l'impulsion d'intérêt ou de l'impulsion résultant de la première ou de la deuxième mise en forme de l'impulsion d'intérêt, l'impulsion d'intérêt étant sélectionnée si la dérivée temporelle seconde ne s'annule pas ou ne change pas de signe.

**11.** Procédé selon la revendication 7, dans lequel l'étape de sélection comporte :

- une détermination d'un temps de montée de l'impulsion d'intérêt ou de l'impulsion résultant de la première ou de la deuxième mise en forme de l'impulsion d'intérêt;
- une comparaison entre le temps de montée déterminé, avec une valeur seuil du temps de montée ;
- une sélection de l'impulsion d'intérêt en fonction de la comparaison.

**12.** Procédé selon l'une quelconque des revendications précédentes, dans lequel le détecteur (10) comporte:

- une électrode de collecte (11), permettant la formation de l'impulsion de mesure et des impulsions d'intérêt ;
- une électrode adjacente ($11_a$) de l'électrode de collecte, l'électrode adjacente étant apte à former une impulsion, dite impulsion adjacente, dont l'amplitude dépend d'une énergie libérée par le rayonnement ionisant lors de son interaction dans le détecteur (10);

et dans lequel la détermination du facteur de correction ($k$) comporte une étape de sélection des impulsions d'intérêt, l'étape de sélection comportant, pour chaque impulsion d'intérêt:

- une affectation d'un instant de détection ($t_d$) à l'impulsion d'intérêt ;
- une analyse d'impulsions ($S_a$) formées par l'électrode adjacente ($11_a$) dans une plage temporelle de coïncidence ($T_d$)s'étendant autour de l'instant de détection ;
- un rejet de l'impulsion d'intérêt lorsqu'une impulsion ($S_a$), résultant de l'électrode adjacente ($11_a$), dans la plage temporelle de coïncidence, dépasse un seuil d'amplitude.

**13.** Procédé selon l'une quelconque des revendications précédentes, dans lequel :

- lors de l'étape b), la mise en forme de l'impulsion de mesure ($S$) est réalisée en appliquant un premier retard temporel à l'impulsion de mesure, pour former une impulsion de mesure retardée, et en soustrayant l'impulsion de mesure retardée à l'impulsion de mesure, le retard temporel correspondant à la première durée de mise en forme ($\delta t_1$);
- lors de l'étape i), la première mise en forme de l'impulsion d'intérêt ($S_1 .... S_N, S_{calib}$) est réalisée en appliquant le premier retard temporel à l'impulsion d'intérêt, pour former une première impulsion d'intérêt retardée, et en soustrayant la première impulsion d'intérêt retardée à l'impulsion d'intérêt ;
- lors de l'étape ii), la deuxième mise en forme de l'impulsion d'intérêt ($S_1 ....S_N, S_{calib}$) est réalisée en appliquant un deuxième retard temporel à l'impulsion d'intérêt, pour former une deuxième impulsion d'intérêt retardée, et en soustrayant la deuxième impulsion d'intérêt retardée à l'impulsion d'intérêt, le deuxième retard temporel correspondant à la deuxième durée de mise en forme ($\delta t_2$).

**14.** Procédé selon l'une quelconque des revendications 1 à 12, dans lequel :

- lors de l'étape b), la mise en forme de l'impulsion de mesure ($S$) est réalisée en appliquant un premierfiltre à l'impulsion de mesure, le premierfiltre prenant en compte la première durée de mise en forme ($\delta t_1$);
- lors de l'étape i), la première mise en forme de l'impulsion d'intérêt ($S_1 .... S_N, S_{calib}$) est réalisée en appliquant le premier filtre à l'impulsion de mesure;

- lors de l'étape ii), la deuxième mise en forme de l'impulsion d'intérêt ($S_1$ ... $S_N$, $S_{calib}$) est réalisée en appliquant un deuxième filtre à l'impulsion d'intérêt, le deuxième filtre prenant en compte la deuxième durée de mise en forme ($\delta t_2$).

15. Circuit électronique de traitement (12) d'une impulsion formée par un détecteur d'un rayonnement ionisant, le détecteur comportant

- un matériau détecteur (10), destiné à interagir avec le rayonnement ionisant, de façon à former des charges électriques lors d'une interaction du rayonnement ionisant dans le détecteur ;
- un circuit de préamplification (20), apte à collecter les charges générées par le détecteur et à former une impulsion ($S$), dite impulsion de mesure, dont l'amplitude dépend de la quantité de charges collectées ;

le circuit électronique de traitement comportant :

- un premier circuit de mise en forme (31,34), configuré pour mettre en forme l'impulsion de mesure selon une première durée de mise en forme ($\delta t_1$), de façon à générer une première impulsion mise en forme ;
- un deuxième circuit de mise en forme (32,35), configuré pour mettre en forme l'impulsion de mesure selon une deuxième durée temporelle de mise en forme ($\delta t_2$), supérieure à la première durée de mise en forme, de façon à générer une deuxième impulsion mise en forme ;
- une unité de comparaison (44), apte à comparer la première impulsion mise en forme et la deuxième impulsion mise en forme, de façon à déterminer un facteur de comparaison ($k$);
- une unité de calcul (46), configurée pour déterminer un facteur de correction ($\eta$) en fonction du facteur de comparaison ($k$);
- une unité de correction (48), apte à appliquer le facteur de correction déterminé par l'unité de calcul à la première impulsion mise en forme, de façon à former une impulsion corrigée ;

le circuit électronique de traitement étant **caractérisé en ce que** l'unité de calcul est apte à mettre en œuvre les étapes i) à iii) du procédé selon l'une quelconque des revendications 1 à 14 à partir d'impulsions, dites impulsions d'intérêt, formées par le détecteur (10) durant une plage temporelle d'intérêt ($\Delta t$).

16. Circuit électronique selon la revendication 15, dans lequel :

- le premier circuit de mise en forme (31,34) comporte une première ligne à retard, configurée pour appliquer un premier retard, correspondant à la première durée de mise en forme ($\delta t_1$), à l'impulsion de mesure, le premier circuit de mise en forme comportant un soustracteur configuré pour soustraire l'impulsion ainsi retardée à l'impulsion de mesure ;
- le deuxième circuit de mise en forme (32,35) comporte une deuxième ligne à retard, configurée pour appliquer un deuxième retard, correspondant à la deuxième durée de mise en forme ($\delta t_2$), à l'impulsion de mesure, le deuxième circuit de mise en forme comportant un soustracteur configuré pour soustraire l'impulsion ainsi retardée à l'impulsion de mesure.

17. Circuit électronique selon la revendication 16, dans lequel :

- le premier circuit de mise en forme est un filtre apte à générer, à partir de l'impulsion de mesure, une première impulsion de forme prédéterminée paramétrée par la première durée de mise en forme ($\delta t_1$);
- le deuxième circuit de mise en forme est un filtre apte à générer, à partir de l'impulsion de mesure, une deuxième impulsion de forme prédéterminée paramétrée par la deuxième durée de mise en forme ($\delta t_2$).

**Patentansprüche**

1. Verfahren zur Verarbeitung eines Impulses ($S$), der durch einen Detektor (10) für ionisierende Strahlung erzeugt wird, wobei der Detektor (10) dazu fähig ist, mit einer ionisierenden Strahlung (5) zu interagieren, um den Impuls zu erzeugen, dessen Amplitude (A) von einer Energie abhängt, die durch die ionisierende Strahlung während ihrer Interaktion in dem Detektor freigesetzt wird, wobei das Verfahren die folgenden Schritte umfasst:

a) Aussetzen des Detektors gegenüber einer ionisierenden Strahlungsquelle (2), um zu einem Messzeitpunkt ($t$) einen Impuls ($S$), der als Messimpuls bezeichnet wird, zu erhalten;
b) Formen des Messimpulses unter Einbeziehung einer ersten Formungsdauer ($\delta t_1$) und Bestimmen einer ersten Amplitude ($A'_1$) des so geformten Messimpulses;
c) Korrigieren der während des Schrittes b) bestimmten ersten Amplitude unter Berücksichtigung eines Korrekturfaktors ($\eta$), um eine korrigiere Amplitude ($A'_c$) zu erhalten;

wobei der Korrekturfaktor ($\eta$) unter Berücksichtigung von Impulsen, die als Impulse von Interesse

$(S_1....S_N, S_{calib})$ bezeichnet werden und die durch den Detektor während einer Aussetzung gegenüber der Quelle oder gegenüber einer Kalibrierquelle vor und/oder nach dem Messimpuls S während eines Zeitbereichs von Interesse ($\Delta t$) gebildet werden, bestimmt wird, wobei das Bestimmen des Korrekturfaktors für jeden Impuls von Interesse die folgenden Schritte umfasst:

> i) erstes Formen des Impulses von Interesse unter Einbeziehung der ersten Formungsdauer ($\delta t_1$) und Messen einer ersten Amplitude des so geformten Impulses von Interesse;
> ii) zweites Formen des Impulses von Interesse unter Einbeziehung einer zweiten Formungsdauer ($\delta t_2$), die sich von der ersten Formungsdauer unterscheidet, und Messen einer zweiten Amplitude des so geformten Impulses von Interesse;
> iii) Vergleichen der ersten Amplitude und der zweiten Amplitude des Impulses von Interesse, um einen Vergleichsfaktor ($k, k_1, ...., k_N, k_{calib}$) zu berechnen;

wobei der Korrekturfaktor ($\eta$) in Abhängigkeit von den während des Schritts iii) für jeden Impuls von Interesse berechneten Vergleichsfaktoren ($k, k_1, ...., k_N, k_{calib}$) bestimmt wird.

2. Verfahren nach einem der vorhergehenden Ansprüche, das ferner Folgendes umfasst:

> - zweites Formen des Messimpulses unter Einbeziehung der zweiten Formungsdauer ($\delta t_2$) und Bestimmen einer zweiten Amplitude ($A'_2$) des so geformten Messimpulses;
> - Vergleichen der ersten Amplitude und der zweiten Amplitude des Messimpulses, um für den Messimpuls einen Vergleichsfaktor ($k$) zu berechnen;

sodass der Korrekturfaktor ($\eta$) ferner in Abhängigkeit von dem für den Messimpuls berechneten Vergleichsfaktor ($k$) bestimmt wird.

3. Verfahren nach einem der vorhergehenden Ansprüche, wobei der Korrekturfaktor ($\eta$) während des Schritts iii) in Abhängigkeit von einem Mittelwert oder einem Medianwert der jeweils für jeden Impuls von Interesse berechneten Vergleichsfaktoren bestimmt wird.

4. Verfahren nach einem der vorhergehenden Ansprüche, wobei sich der Zeitbereich von Interesse ($\Delta t$) auf einer oder auf beiden Seiten des Messzeitpunkts (t) erstreckt.

5. Verfahren nach einem der Ansprüche 1 bis 3, wobei der Zeitbereich von Interesse ($\Delta t$) einer Kalibrierphase entspricht, während der der Detektor einer Kalibrierquelle ausgesetzt wird, wobei das Verfahren dergestalt ist, dass während des Schritts iii) das Bestimmen des Korrekturfaktors für jeden Impuls von Interesse ($S_{calib}$) ferner die folgenden Schritte umfasst:

> iv) drittes Formen des Impulses von Interesse unter Einbeziehung einer dritten Formungsdauer ($\delta t_3$), wobei die dritte Formungsdauer in jedem Fall größer als die zweite Formungsdauer ($\delta t_2$) und die erste Formungsdauer ($\delta t_1$) ist, und Bestimmen einer dritten Amplitude ($A'_{calib-3}$) des so geformten Impulses von Interesse;
> v) Vergleichen der dritten Amplitude mit der ersten Amplitude des Impulses von Interesse, die sich aus dem Schritt i) ergibt, oder mit der zweiten Amplitude des Impulses von Interesse, die sich aus dem Schritt ii) ergibt, um einen sogenannten Hilfsvergleichsfaktor ($k_1, k_2$) zu berechnen;

wobei das Bestimmen des Korrekturfaktors ferner das Erstellen einer Korrekturfunktion ($f$) umfasst, die die Entwicklung des für Impulse von Interesse ($S_{calib}$) bestimmten Vergleichsfaktors ($k_{calib}$) in Abhängigkeit von dem für die Impulse von Interesse bestimmten Hilfsvergleichsfaktor darstellt, wobei das Verfahren ferner Folgendes umfasst:

> - zweites Formen des Messimpulses unter Einbeziehung der zweiten Formungsdauer ($\delta t_2$) und Bestimmen einer zweiten Amplitude des Messimpulses ($A'_2$);
> - Vergleichen der ersten Amplitude ($A'_1$) und der zweiten Amplitude ($A'_2$) des Messimpulses, um für den Messimpuls einen Vergleichsfaktor ($k$) zu berechnen;

sodass während des Schritts c) der Korrekturfaktor ($\eta$) in Abhängigkeit von einem Wert der Korrekturfunktion ($f$) bestimmt wird, der ferner dem für den Messimpuls berechneten Vergleichsfaktor ($k$) entspricht.

6. Verfahren nach einem der Ansprüche 1 bis 4, wobei:

> - die Schritte a) und b) während einer Erfassungsperiode ($T_a$) für eine Vielzahl von Messimpulsen umgesetzt werden, wobei das Verfahren einen Schritt b') des Bildens eines Spektrums ($Sp$) umfasst, das ein Histogramm der während jedes Schritts b) geformten ersten Amplituden ($A'_1$) darstellt;
> - die Schritte i) bis iii) für jeden während der Erfassungsperiode ($T_a$) erfassten Impuls durchgeführt werden, sodass der Zeitbereich von Inter-

esse ($\Delta t$) der Erfassungsperiode entspricht;
- während des Schritts c) das Verfahren ein Anpassen des während des Schritts b') gebildeten Spektrums ($Sp$) unter Berücksichtigung des während des Schritts iii) berechneten Korrekturfaktors ($\eta$) umfasst, um ein korrigiertes Spektrum ($Sp_c$) zu bilden.

7. Verfahren nach einem der vorhergehenden Ansprüche, wobei das Bestimmen des Korrekturfaktors einen Schritt des Auswählens der Impulse von Interesse umfasst, wobei der Schritt des Auswählens für jeden Impuls von Interesse Folgendes umfasst:

    - Bestimmen eines Kriteriums des Impulses von Interesse oder des Impulses, der sich aus dem ersten oder dem zweiten Formen des Impulses von Interesse ergibt;
    - Vergleichen des Kriteriums mit einem Schwellenwert;
    - Auswählen des Impulses von Interesse in Abhängigkeit von dem Vergleich;

    sodass die Schritte i) bis iii) nur für die so ausgewählten Impulse von Interesse umgesetzt werden.

8. Verfahren nach Anspruch 7, wobei der Schritt des Auswählens Folgendes umfasst:

    - Bestimmen einer Dauer des Impulses von Interesse, der sich aus dem ersten oder dem zweiten Formen ergibt;
    - Vergleichen der bestimmten Dauer mit einer Schwellendauer;
    - Auswählen des Impulses von Interesse in Abhängigkeit von dem Vergleich.

9. Verfahren nach Anspruch 7, wobei der Schritt des Auswählens Folgendes umfasst:

    - Bestimmen einer Fläche und einer Amplitude des Impulses, der sich aus dem ersten oder dem zweiten Formen des Impulses von Interesse ergibt;
    - Berechnen eines Verhältnisses zwischen der so bestimmten Fläche und der so bestimmten Amplitude;
    - Vergleichen des Verhältnisses mit einem Verhältnisschwellenwert;
    - Auswählen des Impulses von Interesse in Abhängigkeit von dem Vergleich.

10. Verfahren nach Anspruch 7, wobei der Schritt des Auswählens ein Bestimmen der zweiten zeitlichen Ableitung des Impulses von Interesse oder des Impulses, der sich aus dem ersten oder dem zweiten Formen des Impulses von Interesse ergibt, umfasst, wobei der Impuls von Interesse ausgewählt wird, wenn die zweite zeitliche Ableitung nicht gleich null ist oder nicht das Vorzeichen verändert.

11. Verfahren nach Anspruch 7, wobei der Schritt des Auswählens Folgendes umfasst:

    - Bestimmen einer Anstiegszeit des Impulses von Interesse oder des Impulses, der sich aus dem ersten oder dem zweiten Formen des Impulses von Interesse ergibt;
    - Vergleichen der bestimmten Anstiegszeit mit einem Schwellenwert der Anstiegszeit;
    - Auswählen des Impulses von Interesse in Abhängigkeit von dem Vergleich.

12. Verfahren nach einem der vorhergehenden Ansprüche, wobei der Detektor (10) Folgendes umfasst:

    - eine Sammelelektrode (11), die das Bilden des Messimpulses und der Impulse von Interesse ermöglicht;
    - eine Nachbarelektrode ($11_a$) der Sammelelektrode, wobei die Nachbarelektrode dazu fähig ist, einen Impuls zu bilden, der als Nachbarimpuls bezeichnet wird und dessen Amplitude von einer Energie abhängt, die durch die ionisierende Strahlung während ihrer Interaktion in dem Detektor (10) freigesetzt wird;

    und wobei das Bestimmen des Korrekturfaktors ($k$) einen Schritt des Auswählens der Impulse von Interesse umfasst, wobei der Schritt des Auswählens für jeden Impuls von Interesse Folgendes umfasst:

    - Zuordnen eines Detektionszeitpunkts ($t_d$) zu dem Impuls von Interesse;
    - Analysieren von Impulsen ($S_a$), die durch die Nachbarelektrode ($11_a$) in einem Koinzidenzzeitbereich ($T_d$), der sich um den Detektionszeitpunkt herum erstreckt, gebildet wurden;
    - Zurückweisen des Impulses von Interesse, wenn ein Impuls ($S_a$), der sich aus der Nachbarelektrode ($11_a$) ergibt, im Koinzidenzzeitbereich eine Schwellenamplitude überschreitet.

13. Verfahren nach einem der vorhergehenden Ansprüche, wobei:

    - während des Schritts b) das Formen des Messimpulses ($S$) durchgeführt wird, indem eine erste zeitliche Verzögerung auf den Messimpuls angewendet wird, um einen verzögerten Messimpuls zu bilden, und indem der verzögerte Messimpuls von dem Messimpuls abgezogen wird, wobei die zeitliche Verzögerung der ersten Formungsdauer ($\delta t_1$) entspricht;
    - während des Schritts i) das erste Formen des Impulses von Interesse ($S_1 \dots S_N, S_{calib}$) durchgeführt wird, indem die erste zeitliche Verzögerung auf den Impuls von Interesse angewendet wird, um einen ersten verzögerten Impuls von Interesse zu bilden, und indem der erste verzögerte Impuls von Interesse von dem Impuls von Interesse abgezogen wird;

- während des Schritts ii) das zweite Formen des Impulses von Interesse ($S_1$ ....$S_N$, $S_{calib}$) durchgeführt wird, indem eine zweite zeitliche Verzögerung auf den Impuls von Interesse angewendet wird, um einen zweiten verzögerten Impuls von Interesse zu bilden, und indem der zweite verzögerte Impuls von Interesse von dem Impuls von Interesse abgezogen wird, wobei die zweite zeitliche Verzögerung der zweiten Formungsdauer ($\delta t_2$) entspricht.

14. Verfahren nach einem der Ansprüche 1 bis 12, wobei:

- während des Schritts b) das Formen des Messimpulses ($S$) durchgeführt wird, indem ein erster Filter auf den Messimpuls angewendet wird, wobei der erste Filter die erste Formungsdauer ($\delta t_1$) berücksichtigt;
- während des Schritts i) das erste Formen des Impulses von Interesse ($S_1$ ....$S_N$, $S_{calib}$) durchgeführt wird, indem der erste Filter auf den Messimpuls angewendet wird;
- während des Schritts ii) das zweite Formen des Impulses von Interesse ($S_1$ ....$S_N$, $S_{calib}$) durchgeführt wird, indem ein zweiter Filter auf den Impuls von Interesse angewendet wird, wobei der zweite Filter die zweite Formungsdauer ($\delta t_2$) berücksichtigt.

15. Elektronische Schaltung zur Verarbeitung (12) eines Impulses, der durch einen Detektor für ionisierende Strahlung gebildet wird, wobei der Detektor Folgendes umfasst:

- ein Material des Detektors (10), das dazu bestimmt ist, mit der ionisierenden Strahlung zu interagieren, um während einer Interaktion der ionisierenden Strahlung in dem Detektor elektrische Ladungen zu bilden;
- eine Vorverstärkungsschaltung (20), die dazu fähig ist, die durch den Detektor erzeugten Ladungen zu sammeln und einen Impuls ($S$) zu bilden, der als Messimpuls bezeichnet wird und dessen Amplitude von der Menge der gesammelten Ladungen abhängt;

wobei die elektronische Verarbeitungsschaltung Folgendes umfasst:

- eine erste Formungsschaltung (31, 34), die dazu konfiguriert ist, den Messimpuls gemäß einer ersten Formungsdauer ($\delta t_1$) zu formen, um einen ersten geformten Impuls zu erzeugen;
- eine zweite Formungsschaltung (32, 35), die dazu konfiguriert ist, den Messimpuls gemäß einer zweiten zeitlichen Formungsdauer ($\delta t_2$), die größer als die erste Formungsdauer ist, zu formen, um einen zweiten geformten Impuls zu erzeugen;
- eine Vergleichseinheit (44), die dazu fähig ist, den ersten geformten Impuls und den zweiten geformten Impuls zu vergleichen, um einen Vergleichsfaktor (k) zu bestimmen;
- eine Recheneinheit (46), die dazu konfiguriert ist, in Abhängigkeit von dem Vergleichsfaktor ($k$) einen Korrekturfaktor ($\eta$) zu bestimmen;
- eine Korrektureinheit (48), die dazu fähig ist, den durch die Recheneinheit bestimmten Korrekturfaktor auf den ersten geformten Impuls anzuwenden, um einen korrigierten Impuls zu bilden;

wobei die elektronische Verarbeitungsschaltung **dadurch gekennzeichnet ist, dass** die Recheneinheit dazu fähig ist, die Schritte i) bis iii) des Verfahrens nach einem der Ansprüche 1 bis 14 auf Grundlage von Impulsen, die als Impulse von Interesse bezeichnet werden und die während eines Zeitbereichs von Interesse ($\Delta t$) durch den Detektor (10) gebildet werden, umzusetzen.

16. Elektronische Schaltung nach Anspruch 15, wobei:

- die erste Formungsschaltung (31, 34) eine erste Verzögerungsleitung umfasst, die dazu konfiguriert ist, eine erste Verzögerung, die der ersten Formungsdauer ($\delta t_1$) entspricht, auf den Messimpuls anzuwenden, wobei die erste Formungsschaltung einen Subtrahierer umfasst, der dazu konfiguriert ist, den so verzögerten Impuls von dem Messimpuls abzuziehen;
- die zweite Formungsschaltung (32, 35) eine zweite Verzögerungsleitung umfasst, die dazu konfiguriert ist, eine zweite Verzögerung, die der zweiten Formungsdauer ($\delta t_2$) entspricht, auf den Messimpuls anzuwenden, wobei die zweite Formungsschaltung einen Subtrahierer umfasst, der dazu konfiguriert ist, den so verzögerten Impuls von dem Messimpuls abzuziehen.

17. Elektronische Schaltung nach Anspruch 16, wobei:

- die erste Formungsschaltung ein Filter ist, der dazu fähig ist, auf Grundlage des Messimpulses einen ersten Impuls mit einer vorgegebenen Form zu erzeugen, der durch die erste Formungsdauer ($\delta t_1$) parametriert wird;
- die zweite Formungsschaltung ein Filter ist, der dazu fähig ist, auf Grundlage des Messimpulses einen zweiten Impuls mit einer vorgegebenen Form zu erzeugen, der durch die zweite Formungsdauer ($\delta t_2$) parametriert wird.

**Claims**

1. Method for processing a pulse ($S$) generated by a detector (10) of ionizing radiation, the detector (10) being able to interact with ionizing radiation (5) in order to generate said pulse, the amplitude ($A$) of which depends on an energy liberated by the ionizing radiation during its interaction in the detector, the method comprising the following steps:

    a) exposing the detector to a source (2) of ionizing radiation so as to obtain, at a measurement time ($t$), a pulse ($S$) called the measurement pulse;
    b) shaping the measurement pulse, using a first shaping duration ($\delta t_1$), and determining a first amplitude ($A'_1$) of the measurement pulse thus shaped; and
    c) correcting the first amplitude determined in step b), by taking into account a correction factor ($\eta$), so as to obtain a corrected amplitude ($A'_c$);

the correction factor ($\eta$) being determined by taking into account pulses, called pulses of interest ($S_1 ... S_N, S_{calib}$), formed by the detector during an exposure to the source or to a calibration source, prior and/or subsequent to the measurement pulse (5), during a time range of interest ($\Delta t$), the determination of the correction factor comprising, for each pulse of interest, the following steps:

    i) shaping the pulse of interest, in a first shaping operation, using the first shaping duration ($\delta t_1$), and measuring a first amplitude of the pulse of interest thus shaped;
    ii) shaping the pulse of interest, in a second shaping operation, using a second shaping duration ($\delta t_2$) that is different from the first shaping duration, and measuring a second amplitude of the pulse of interest thus shaped; and
    iii) comparing the first amplitude and the second amplitude of the pulse of interest, so as to calculate a comparison factor ($k, k_1 ... k_N, k_{calib}$);

the correction factor ($\eta$) being determined depending on the comparison factors ($k, k_1, ..., k_N, k_{calib}$) calculated, in step iii), for each pulse of interest.

2. Method according to any one of the preceding claims, also comprising:

    - shaping the measurement pulse in a second shaping operation, using the second shaping duration ($\delta t_2$), and determining a second amplitude ($A'_2$) of the measurement pulse thus shaped; and
    - comparing the first amplitude and the second amplitude of the measurement pulse, so as to calculate, for the measurement pulse, a comparison factor ($k$);

such that the correction factor ($\eta$) is also determined depending on the comparison factor ($k$) calculated for the measurement pulse.

3. Method according to either one of the preceding claims, wherein, in step iii), the correction factor ($\eta$) is determined depending on a mean value or a median value of the comparison factors respectively calculated for each pulse of interest.

4. Method according to any one of the preceding claims, wherein the time range of interest ($\Delta t$) lies before and/or after the measurement time ($t$).

5. Method according to any one of Claims 1 to 3, wherein the time range of interest ($\Delta t$) corresponds to a calibration phase, in which the detector is exposed to a calibration source, the method being such that, in step iii), the determination of the correction factor also comprises, for each pulse of interest ($S_{calib}$), the following steps:

    iv) shaping the pulse of interest, in a third shaping operation, using a third shaping duration ($\delta t_3$), the third shaping duration being strictly longer than the second shaping duration ($\delta t_2$) and than the first shaping duration ($\delta t_1$), and determining a third amplitude ($A'_{calib-3}$) of the pulse of interest thus shaped; and
    v) comparing the third amplitude with the first amplitude of the pulse of interest resulting from step i) or with the second amplitude of the pulse of interest, resulting from step ii), so as to calculate what is called an auxiliary comparison factor ($k_1, k_2$);

the determination of the correction factor also comprising establishing a correction function ($f$) representing the variation of the comparison factor ($k_{calib}$) determined for the pulses of interest ($S_{calib}$) as a function of the auxiliary comparison factor determined for said pulses of interest, the method also comprising:

    - shaping the measurement pulse, in a second shaping operation, using the second shaping duration ($\delta t_2$), and determining a second amplitude ($A'_2$) of the measurement pulse; and
    - comparing the first amplitude ($A'_1$) and the second amplitude ($A'_2$) of the measurement pulse, so as to calculate, for the measurement pulse, a comparison factor ($k$);

such that, in step c), the correction factor ($\eta$) is determined depending on a value of the correction function ($f$) also corresponding to the comparison factor ($k$) calculated for the measurement pulse.

**6.** Method according to any one of Claims 1 to 4, wherein:

- steps a) and b) are implemented for a plurality of measurement pulses, during an acquisition period ($T_a$), the method comprising a step b') of forming a spectrum ($Sp$), representing a histogram of the first amplitudes ($A'_1$) shaped in each step b);
- steps i) to iii) are carried out for each pulse acquired during the acquisition period ($T_a$), such that the time range of interest ($\Delta t$) corresponds to the acquisition period; and
- in step c), the method comprises a realignment of the spectrum ($Sp$) formed in step b'), taking into account the correction factor ($\eta$) calculated in step iii), so as to form a corrected spectrum ($Sp_c$).

**7.** Method according to any one of the preceding claims, wherein the determination of the correction factor comprises a step of selecting pulses of interest, the selecting step comprising, for each pulse of interest:

- determining a criterion of the pulse of interest or of the pulse resulting from the first or from the second operation of shaping the pulse of interest;
- comparing the criterion with a threshold value; and
- selecting the pulse of interest depending on the comparison;

such that steps i) to iii) are implemented only for the pulses of interest thus selected.

**8.** Method according to Claim 7, wherein the selecting step comprises:

- determining a duration of the pulse of interest resulting from the first or from the second shaping operation;
- comparing the determined duration with a threshold duration; and
- selecting the pulse of interest depending on the comparison.

**9.** Method according to Claim 7, wherein the selecting step comprises:

- determining an area and an amplitude of the pulse resulting from the first or from the second operation of shaping the pulse of interest;
- calculating a ratio between the area and the amplitude thus determined;
- comparing the ratio with a threshold ratio value; and
- selecting the pulse of interest depending on the comparison.

**10.** Method according to Claim 7, wherein the selecting step comprises determining the second time derivative of the pulse of interest or of the pulse resulting from the first or from the second operation of shaping the pulse of interest, the pulse of interest being selected if the second time derivative does not tend to zero or does not change sign.

**11.** Method according to Claim 7, wherein the selecting step comprises:

- determining a rise time of the pulse of interest or of the pulse resulting from the first or from the second operation of shaping the pulse of interest;
- comparing the determined rise time with a threshold value of the rise time; and
- selecting the pulse of interest depending on the comparison.

**12.** Method according to any one of the preceding claims, wherein the detector (10) comprises:

- a collecting electrode (11), allowing the measurement pulse and the pulses of interest to be formed; and
- an electrode ($11_a$) adjacent to the collecting electrode, the adjacent electrode being able to form a pulse, called the adjacent pulse, the amplitude of which depends on an energy liberated by the ionizing radiation during its interaction in the detector (10);

and wherein the determination of the correction factor ($k$) comprises a step of selecting pulses of interest, the selecting step comprising, for each pulse of interest:

- assigning a detection time ($t_d$) to the pulse of interest;
- analysing pulses ($S_a$) formed by the adjacent electrode ($11_a$) in a time range of coincidence ($T_d$) lying about the detection time; and
- rejecting the pulse of interest when a pulse ($S_a$), resulting from the adjacent electrode ($11_a$), in the time range of coincidence, exceeds an amplitude threshold.

**13.** Method according to any one of the preceding claims, wherein:

- in step b), the measurement pulse ($S$) is shaped by applying a first time delay to the measurement pulse, to form a delayed measurement pulse, and by subtracting the delayed measurement pulse from the measurement pulse, the time delay corresponding to the first shaping duration ($\delta t_1$);
- in step i), the first operation of shaping the pulse of interest ($S_1 ... S_N, S_{calib}$) is carried out by applying the first time delay to the pulse of interest, in order to form a first delayed pulse of interest, and by subtracting the first delayed pulse of interest from the pulse of interest; and
- in step ii), the second operation of shaping the pulse of interest ($S_1 ... S_N, S_{calib}$) is carried out by applying a second time delay to the pulse of interest, to form a second delayed pulse of interest, and by subtracting the second delayed pulse of interest from the pulse of interest, the second time delay corresponding to the second shaping duration ($\delta t_2$).

**14.** Method according to any one of Claims 1 to 12, wherein:

- in step b), the measurement pulse ($S$) is shaped by applying a first filter to the measurement pulse, the first filter taking into account the first shaping duration ($\delta t_1$) ;
- in step i), the first operation of shaping the pulse of interest ($S_1 ... S_N, S_{calib}$) is carried out by applying the first filter to the measurement pulse; and
- in step ii), the second operation of shaping the pulse of interest ($S_1 ... S_N, S_{calib}$) is carried out by applying a second filter to the pulse of interest, the second filter taking into account the second shaping duration ($\delta t_2$).

**15.** Electronic circuit (12) for processing a pulse formed by a detector of ionizing radiation, the detector comprising

- a detector (10) material, intended to interact with the ionizing radiation, so as to form electrical charge during an interaction of the ionizing radiation in the detector; and
- a preamplifying circuit (20), able to collect the charge generated by the detector and to form a pulse ($S$), called the measurement pulse, the amplitude of which depends on the amount of charge collected;

the electronic processing circuit comprising:

- a first shaping circuit (31, 34), configured to shape the measurement pulse using a first shaping duration ($\delta t_1$), so as to generate a first shaped pulse;
- a second shaping circuit (32, 35), configured to shape the measurement pulse using a second shaping time duration ($\delta t_2$), longer than the first shaping duration, so as to generate a second shaped pulse;
- a comparing unit (44), able to compare the first shaped pulse and the second shaped pulse, so as to determine a comparison factor ($k$);
- a computing unit (46), configured to determine a correction factor ($\eta$) depending on the comparison factor ($k$); and
- a correcting unit (48), able to apply the correction factor determined by the computing unit to the first shaped pulse, so as to form a corrected pulse;

the electronic processing circuit being **characterized in that** the computing unit is able to implement steps i) to iii) of the method according to any one of Claims 1 to 14 on the basis of pulses, called pulses of interest, formed by the detector (10) during a time range of interest ($\Delta t$).

**16.** Electronic circuit according to Claim 15, wherein:

- the first shaping circuit (31, 34) comprises a first delay line, which delay line is configured to apply a first delay, corresponding to the first shaping duration ($\delta t_1$), to the measurement pulse, the first shaping circuit comprising a subtractor that is configured to subtract the pulse thus delayed from the measurement pulse; and
- the second shaping circuit (32, 35) comprises a second delay line, which delay line is configured to apply a second delay, corresponding to the second shaping duration ($\delta t_2$), to the measurement pulse, the second shaping circuit comprising a subtractor that is configured to subtract the pulse thus delayed from the measurement pulse.

**17.** Electronic circuit according to Claim 16, wherein:

- the first shaping circuit is a filter able to generate, from the measurement pulse, a first pulse of pre-set shape parameterized by the first shaping duration ($\delta t_1$); and
- the second shaping circuit is a filter able to generate, from the measurement pulse, a second pulse of pre-set shape parameterized by the second shaping duration ($\delta t_2$).

**Fig. 1A**

**Fig. 1B**

**Fig. 1C**

**Fig. 1D**

**Fig. 2A**

**Fig. 2B**

**Fig. 2C**

**Fig. 3A**

**Fig. 3B**

**Fig. 3C**

**Fig. 3D**

Fig. 4A

Fig. 4B

**Fig. 4C**

**Fig. 4D**

**Fig. 4E**

**Fig. 5A**

**Fig. 5B**

**Fig. 5C**

**Fig. 6A**

**Fig. 6B**

**Fig. 6C**

**Fig. 6D**

**Fig. 6E**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017086761 A

- US 7652242 B

**Littérature non-brevet citée dans la description**

- **GOULDING F.S.** Large coaxial germanium detectors - Correction for ballistic deficit and trapping losses. *IEEE transactions on nuclear science,* Avril 1990, vol. 37 (2